(19) Europäisches Patentamt
European Patent Office
Office européen des brevets

(11) **EP 4 099 876 B1**

(12) **EUROPEAN PATENT SPECIFICATION**

(45) Date of publication and mention
of the grant of the patent:
**14.02.2024 Bulletin 2024/07**

(21) Application number: **21702285.4**

(22) Date of filing: **04.02.2021**

(51) International Patent Classification (IPC):
**A47J 31/44** *(2006.01)*

(52) Cooperative Patent Classification (CPC):
**A47J 31/4492**

(86) International application number:
**PCT/EP2021/052605**

(87) International publication number:
**WO 2021/156336 (12.08.2021 Gazette 2021/32)**

(54) **BEVERAGE PREPARATION MACHINE WITH CAPSULE RECOGNITION**

GETRÄNKEHERSTELLUNGSMASCHINE MIT KAPSELERKENNUNG

MACHINE DE PRÉPARATION DE BOISSONS AVEC RECONNAISSANCE DE CAPSULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2020 EP 20155755**

(43) Date of publication of application:
**14.12.2022 Bulletin 2022/50**

(73) Proprietor: **Société des Produits Nestlé S.A.
1800 Vevey (CH)**

(72) Inventors:
• **GUYON, Bertrand
  25300 Pontarlier (FR)**
• **RESTELLI, Marco
  1814 LA TOUR-DE-PEILZ (CH)**
• **LAGOUCHE, Laurent
  74500 EVIAN LES BAINS (FR)**

(74) Representative: **Navarro Fernández, Maria Isabel
Société des Produits Nestlé S.A.
Avenue Nestlé 55
1800 Vevey (CH)**

(56) References cited:
**EP-A1- 3 275 345     WO-A1-2019/154527**

**Description**

Field of the Invention

The field of the invention pertains to beverage preparation machines using capsules of an ingredient of the beverage to be prepared. The field of the invention pertains in particular to beverage preparation machines using capsules and configured to automatically recognize a type of a capsule inserted in the machine in order for example to adapt the beverage preparation parameters to the recognized capsule type.

For the purpose of the present description, a "beverage" is meant to include any human-consumable liquid substance, such as tea, coffee, hot or cold chocolate, milk, soup, baby food, etc. A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient. The capsule may contain an amount of ingredient for preparing a single beverage portion or a plurality of beverage portions.

Background Art

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing beverage ingredients is inserted in a brewing device.

Brewing devices have been developed to facilitate insertion of a "fresh" capsule and removal of the capsule upon use. Typically, the brewing devices comprise two parts relatively movable from a configuration for inserting/removing a capsule to a configuration for brewing the ingredient in the capsule.

The actuation of the movable part of the brewing device may be manual as disclosed in WO 2009/043630, WO 01/15581, WO 02/43541, WO 2010/015427, WO 2010/128109, WO 2011/144719 and WO 2012/032019. Various handle configurations are disclosed in EP 1867260, WO 2005/004683, WO 2007/135136, WO 2008/138710, WO 2009/074550, WO 2009/074553, WO 2009/074555, WO 2009/074557, WO 2009/074559, WO 2010/037806, WO 2011/042400, WO 2011/042401 and WO 2011/144720. Integrations of such arrangements into beverage machines are disclosed in WO 2009/074550, WO 2011/144719, EP2014195046, EP2014195048 and EP2014195067.

The actuation of the movable part of the brewing device may be motorized. Such a system is for example disclosed in EP 1 767 129. In this case, the user does not have to provide any manual effort to open or close the brewing device. The brewing device has a capsule insertion passage provided with a safety door assembled to the movable part of the brewing device via a switch for detecting an undesired presence of a finger in the passage during closure and prevent injuries by squeezing. Alternative covers for a capsule insertion passage are disclosed WO 2012/093107 and WO 2013/127906. Different motorization systems are disclosed in WO 2012/025258, WO 2012/025259 and WO 2013/127476.

For allowing the user to interact with such machines, for providing operation instructions to the machine or obtaining feed-back therefrom, various systems have been disclosed in the art, for instance as mentioned in the following references: AT 410 377, CH 682 798, DE 44 29 353, DE 202 00 419, DE 20 2006 019 039, DE 2007 008 590, EP 1 448 084, EP 1 676 509, EP 08155851.2, FR 2 624 844, GB 2 397 510, US 4,377,049, US 4,458,735, US 4,554,419, US 4,767,632, US 4,954,697, US 5,312,020, US 5,335,705, US 5,372,061, US 5,375,508, US 5,645,230, US 5,685,435, US 5, 731, 981, US 5, 836, 236, US 5, 959, 869, US 6,182,555, US 6,354,341, US 6,759,072, US 2007/0157820, WO 97/25634, WO 99/50172, WO 2004/030435, WO 2004/030438, WO 2006/063645, WO 2006/090183, WO 2007/003062, WO 2007/003990, WO 2008/104751, WO 2008/138710, WO 2008/138820, WO 2010/003932, WO 2011/144720 and WO 2012/032019.

To facilitate the operating of the machine, it is possible to identify automatically the capsule supplied to the machine and then handle and extract the capsule automatically, as for instance disclosed in WO 2012/123440.

WO 2019/154527 A1 discloses a beverage preparation machine, comprising an extraction unit for extracting a beverage ingredient capsule to form said beverage, e.g. a unit having a first part and a second part that are relatively movable between a distant position for inserting and/or removing a capsule and a closed position, such as a closed position in which the first and second parts delimit an extraction chamber, for securing and extracting such capsule, optionally at least one of the parts has a capsule opener e.g. one or more capsule piercers and/or at least one of the parts has an opening for an inflow of liquid to be mixed with an ingredient contained in such capsule; a control unit for controlling the extraction unit to extract such capsule, such as a control unit powered by the mains e.g. via an electric cord; an outlet for dispensing the beverage formed by extracting such capsule to a user-receptacle, such as a cup or a mug, located in a receptacle placing area, such as on a receptacle support e.g. an external placement support on which such machine is located or a machine support e.g. a movable or removable machine support, to collect the beverage, a capsule recognition module for recognizing a type of a capsule inserted in the machine, the capsule recognition module comprising a sensor for sensing a property of at least part of such capsule and determining a sample value representative of the property of such capsule; wherein the capsule recognition module is configured to compare the sample value to a plurality of reference values, wherein each reference value corresponds to a type of capsule, by, for each reference value of the plurality of reference values, computing a score representative of a probability of a match between the sample value and the reference value; wherein the capsule recognition module is configured to, if a determination of the capsule type can be made with sufficient certainty, for example if a single reference value results in a score indicating a probability of match higher than a predefined threshold, determine that such capsule is of the type corresponding to the respective reference value.

There is still a need to improve the beverage dispensing with machines that reliably identify capsules automatically.

Summary of the Invention

The invention relates to a machine for preparing a beverage. The beverage preparation machine can be an in-home or out of home machine.

The machine may be for the preparation of coffee, tea, chocolate, cacao, milk, soup, baby food, etc.

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluents liquid, e.g. water, may be mixed with such ingredient to form the beverage. Typically, a predetermined amount of beverage is formed and dispensed on user-request, which corresponds to a portion (e.g. a serving). The volume of such portion may be in the range of 25 to 200 ml and even up to 300 or 400 ml, e.g. the volume for filling a cup, depending on the type of beverage. Formed and dispensed beverages may be selected from ristrettos, espressos, lungos, cappuccinos, latte macchiato, café latte, americano coffees, teas, etc. In particular, a coffee machine may be configured for dispensing espressos, e.g. an adjustable volume of 20 to 60 ml per portion, and/or for dispensing lungos, e.g. a volume in the range of 70 to 150 ml per portion.

The machine of the invention has a unit for extracting a beverage ingredient capsule to form the beverage. The unit has a first part and a second part that are relatively movable between a distant position for inserting and/or removing a capsule and a closed position for securing and extracting such capsule. In the closed position the first and second parts typically delimit an extraction chamber.

The capsule can comprise a capsule body, e.g. a generally straight or tapered body. The capsule can have a circular peripheral annulus flange, e.g. a flexible or rigid flange, extending from a peripheral part, e.g. an edge or face, of the capsule body. The capsule may contain a flavoring ingredient for preparing tea, coffee, hot chocolate, cold chocolate, milk, soup or baby food.

At least one part of the first and second parts may delimit a cavity for receiving the ingredient e.g. within a capsule, such as a tapered cavity, e.g. a conical or pyramidal cavity, or a straight cavity, e.g. a cylindrical or trapezoidal cavity. Such cavity may extend along an axis that is generally collinear with a direction of relative movement of the first and second parts. The extraction chamber is then delimited on one side by such cavity.

The other part of these first and second parts may be delimited by another cavity or include an extraction plate, such as a plate provided with piercing elements for opening a flow-through face of the capsule or a non-intrusive plate for cooperating with a pre-opened or a self-opening flow-through face of the capsule.

Examples of extraction chambers are disclosed in in WO 2008/037642 and WO 2013/026843.

At least one of these parts can have a capsule opener e.g. one or more capsule piercers.

The capsule can also include a self-opening mechanism. Self-opening capsules are for instance disclosed in CH 605 293 and WO 03/059778.

When closed capsules are used, the first and second parts may include a capsule opener such as blades and/or a tearing tool, e.g. a plate with a tearing profile, for instance as known from Nespresso™ machines or as disclosed in EP 0 512 470, EP 2 068 684 and WO 2014/076041 and the references cited therein.

At least one of the parts may have an opening for an inflow of liquid to be mixed with an ingredient contained in such capsule.

The machine includes a control unit for controlling the extracting unit to extract such capsule. The control unit can be powered by the mains e.g. via an electric cord.

The machine has an outlet for dispensing the beverage formed by extracting such capsule to a user-receptacle, such as a cup or a mug, located in a receptacle placing area.

A flavoured beverage may be prepared by circulating (by means of a liquid driver, e.g. a pump) a carrier liquid, such as water, into the capsule to flavour the liquid by exposure to a flavouring ingredient held in the capsule, e.g. along an extraction direction that may be generally parallel to the direction of relative movement of the first and second parts or to a longitudinal or central direction of the extraction.

For instance, the user receptacle can be placed on a receptacle support to collect the beverage.

The receptacle support can be formed by an external placement support on which such machine is located.

The receptacle support may be formed by a support comprised by the machine, e.g. a movable or removable machine support.

The receptacle placing area can be associated with a machine recipient support for supporting such user-recipient under the outlet. The support can be: associated with a drip tray e.g. a drip tray supporting the support; and/or movable relative to the housing vertically under the outlet and/or away from under the outlet for enabling a placement of user-recipients of different heights under the outlet. Examples of suitable recipient supports are disclosed in EP 0 549 887, EP 1 440 639, EP 1 731 065, EP 1 867 260, US 5,161,455, US 5,353,692, WO 2009/074557, WO 2009/074559, WO 2009/135869, WO 2011/154492, WO 2012/007313, WO 2013/186339, WO 2016/096705, WO 2016/096706 and WO 2016/096707.

In embodiments, the outlet can be fixed to or formed by or mounted to or mounted in:

- a machine head that has a deployed position in which the outlet is located above the receptacle placing area and a collapsed position in which the outlet is retracted within an external machine main housing, such as a machine head driven inwards into and outwards out of the main housing by at least one of the first and second parts or by an actuator controlled by the control unit; and/or

- a movable beverage guide that has a beverage dispensing configuration to dispense beverage to the receptacle placing area and a beverage stop configuration to prevent dispensing of beverage to the receptacle placing area, e.g. by draining residual beverage from the guide over a guide edge to a waste receptacle, such as a beverage guide driven between the dispensing configuration and the stop configuration by at least one of the first and second parts or by a (or the above) machine head or by an actuator controlled by the control unit.

For instance, the machine is provided with a machine head as disclosed in WO 2017/037212 and in WO 2017/037215.

Examples of suitable waste receptacles for carrying out the present invention are disclosed in EP 1867260, WO 2009/074559, WO 2009/135869, WO 2010/128109, WO 2011/086087, WO 2011/086088, PCT/EP2017/050237 and WO 2017/037212.

The directing fluid guide can be entirely confined in the main body and/or the machine head.

Details of directing fluid guides that are suitable or adaptable for carrying out the present invention are disclosed in WO 2006/050769, WO 2012/072758, WO 2013/127907, WO 2016/083488 and WO 2017/037212.

The extraction unit can include a capsule feeder for feeding a capsule to the extraction chamber, the feeder having a capsule dispenser with a release configuration for releasing such capsule from the feeder towards the extraction chamber and a retain configuration for retaining such capsule away from the extraction chamber.

The capsule dispenser can be formed by a mechanical and/or magnetic capsule gate such as a capsule holder e.g. having a shape complementary to and matching at least part of an outer shape of such capsule.

The capsule holder may have a capsule gate that is movable, such as pivotable and/or translatable, between a position obstructing a transfer towards the extraction chamber and a position clearing the transfer towards the extraction chamber.

The capsule holder may have an actuator for passing from the retain configuration to the release configuration and vice versa, such as an actuator controlled by the control unit.

Immediately after releasing a capsule towards the extraction, the capsule dispenser may be passed from the release configuration to the retain configuration so that access towards the extraction chamber is only provided when needed to release a capsule.

Details of suitable capsule dispensers are disclosed in WO 2012/126971, WO 2014/056641, WO 2014/056642 and WO 2015/086371.

The capsule feeder may include a passage for guiding such capsule to the extraction chamber into a predetermined capsule orientation for its entry into the extraction chamber such as a passage associated with capsule immobilizer for immobilizing such capsule between the first and second parts in their distant position prior to relatively moving them into their closed position.

The interaction between the first and second parts (and optionally the capsule guiding passage) and an ingredient capsule may be of the type disclosed in WO 2005/004683, WO 2007/135135, WO 2007/135136, WO 2008/037642 and WO 2013/026856.

The control unit may control the capsule dispenser to release such capsule from the feeder when the first and second parts are in the distant position or moving towards the distant position, for an entry of such capsule into the extraction chamber when the first and second parts are brought back into their closed position.

The control unit may control the capsule dispenser to retain such capsule at the feeder and away from the extraction chamber when the first and second parts are:

- in the closed position or relatively moving thereto; or

- in the distant position and about to relatively move to the closed position so as to leave insufficient time for such capsule, if it were released from the dispenser, to be received into the extraction chamber prior to the first and second parts reaching the closed position.

The capsule feeder may include or be associated with a capsule sensor connected to the control unit, the control unit being configured to bring or maintain the capsule dispenser in its retain configuration when the capsule sensor senses no such capsule on or at the capsule dispenser. Examples of capsule sensors are for example disclosed in WO 2012/123440, WO 2014/147128, WO 2015/173285, WO 2015/173289, WO 2015/173292, WO 2016/005352 and WO 2016/005417.

The control unit can be configured to control the actuator so that the first and second parts are moved by the actuator: from the closed position into the distant position and from the distant position into the closed position after a predetermined period of time starting for example from a beverage preparation triggering event such as for example capsule detection, capsule recognition, user actuation of the machine's user interface, etc., or a combination thereof, for instance a predetermined period of time in the range of 3 to 15 sec, such as 5 to 12 sec, e.g. 7 to 10 sec.

Examples of such parts that are relatively moved by an actuator (e.g. a motor) are disclosed in EP 1767129, WO 2012/025258, WO 2012/025259, WO 2013/127476 and WO 2014/056641.

For instance, the first part and the second part are relatively movable generally along a straight axis by the actuator from the closed to the distant positions and/or vice versa.

The machine may include a liquid supplier for supplying liquid, e.g. water, into the extraction chamber, the liquid supplier being connected to and controlled by the control unit to supply such liquid into the extraction chamber and to interrupt such supply, automatically and/or manually via a user-interface connected to the control unit and/or when a removal of such receptacle is detected by the detecting arrangement. For instance, the liquid supplier includes one or more of: a source of said liquid, such as a liquid tank or a liquid connector for connection to an external liquid provider; one or more liquid tubes for guiding such liquid to the extraction chamber; a liquid driver, such as a pump e.g. a solenoid pump (reciprocating piston pump) or a peristaltic pump or a diaphragm pump, for driving such liquid into extraction chamber; and a thermal conditioner, e.g. a heater and/or a cooler, such as an inline thermal conditioner, e.g. an inline flow conditioner, for thermally conditioning such liquid.

Examples of suitable liquid sources, e.g. tanks or connectors, are disclosed in WO 2016/005349, EP2015194020.2, PCT/EP2017/050237 and the references cited therein.

The thermal conditioner may be a boiler or a thermoblock or an on demand heater (ODH), for instance an ODH type disclosed in EP 1 253 844, EP 1 380 243 and EP 1 809 151.

Examples of pumps and their incorporation into beverage machines are disclosed in WO 2009/150030, WO 2010/108700, WO 2011/107574 and WO 2013/098173.

The control unit may be configured to control the liquid supplier to supply automatically the liquid into the extraction chamber when:

- the first and second parts have reached their closed position with the capsule housed in the extraction chamber upon moving the parts from the distant to the closed positions so as to combine said liquid with an ingredient contained in the capsule and form the beverage for dispensing via the outlet, optionally after sensing with a (or the above) capsule sensor a supply of such capsule to the unit; and/or

- the first and second parts have reached their closed position without any capsule housed in the extraction chamber so as to rinse or clean at least part of the unit and optionally the outlet, the liquid supplier being for instance configured to supply the liquid at a rinsing or cleaning temperature that is different to the temperature of such liquid for forming a beverage, e.g. by brewing.

In a particular embodiment, it is also contemplated to deliver cold or cooled beverages.

The control unit can be configured to control the liquid supplier not to supply automatically the liquid into the extraction chamber when the first and second parts have reached their closed position without any (for instance detected or recognised) capsule housed in the extraction chamber. For instance, the control unit is configured to control the liquid supplier to supply the liquid into the extraction chamber upon sensing a corresponding manual user-input on a user-interface connected to the control unit.

The control unit may have an end-of-extraction management program which is run automatically when the liquid supply is interrupted (e.g. when a predetermined extraction process is over or is detected as faulty) to:

- immediately relatively move the first and second parts into their distant position so as to remove any capsule from inbetween the first and second parts; or

- to maintain the first and second parts in the closed position during a predetermined period of time, e.g. in the range of 1 to 5 sec such as 2 to 3 sec, for allowing a manual request, e.g. via a user-interface connected to the control unit, to supply via the liquid supplier an additional amount of liquid into the extraction chamber and, in the absence of such manual request during the predetermined period of time, to relatively move the first and second parts into their distant position so as to remove any capsule from inbetween the first and second parts, for instance to remove such capsule into a used-capsule collector formed by a (or the above) waste receptacle.

For instance, prior to moving the first and second parts into their closed position, the parts may remain into their distant position for a predetermined period of time, such as a period of time in the range of 1 to 6 sec. e.g. 2 to 4 sec, for allowing an insertion of a new capsule inbetween the first and second parts prior to relatively moving them into their closed position with the new capsule housed in the extraction chamber for an extraction of the new capsule.

Hence, a user can request the dispensing of two (or more) portions of beverages (e.g. a double expresso) into the same user-recipient.

According to the invention, the machine comprises:

- an extraction unit for extracting a beverage ingredient capsule to form said beverage, e.g. a unit having a first part and a second part that are relatively movable between a distant position for inserting and/or removing a capsule and a closed position, such as a closed position in which the first and second parts delimit an extraction chamber, for securing and extracting such capsule, optionally at least one of the parts has a capsule opener e.g. one or more capsule piercers and/or at least one of the parts has an opening for an inflow of liquid to be mixed with an ingredient contained in such capsule;

- a control unit for controlling the extraction unit to extract such capsule, such as a control unit powered by the mains e.g. via an electric cord;

- an outlet for dispensing the beverage formed by extracting such capsule to a user-receptacle, such as a cup or a mug, located in a receptacle placing area, such as on a receptacle support e.g. an external placement support on which such machine is located or a machine support e.g. a movable or removable machine support, to collect the beverage,

- a capsule recognition module for recognizing a type of a capsule inserted in the machine, the capsule recognition module comprising a sensor for sensing a property of at least part of such capsule and determining a sample value representative of the property of such capsule;

    wherein the capsule recognition module is configured to compare the sample value to a plurality of reference values, wherein each reference value corresponds to a type of capsule, by, for each reference value of the plurality of reference values, computing a score representative of a probability of a match between the sample value and the reference value;

    wherein the capsule recognition module is configured to

    - if a determination of the capsule type can be made with sufficient certainty, for example if a single reference value results in a score indicating a probability of match higher than a predefined threshold, determine that such capsule is of the type corresponding to the respective reference value;

    - if no determination of the capsule type can be made with sufficient certainty, for example because no reference value results in a score indicating a probability of match higher than said threshold, because more than one reference value results in a score indicating such a probability of match and/or because the reference value that resulted in the score indicating the highest probability of match corresponds to a capsule type that is known to be distinguishable only with difficulty from one or more other types of capsules, select at least two reference values, for example three, four or more reference values.

Selecting at least two reference values, i.e. at least two corresponding types of capsules, as a result of the capsule recognition process if no determination can be made with sufficient certainty allows avoiding extracting a capsule with inappropriate extraction parameters following of an error in the recognition process. Selecting at least two reference values having the highest probability of matching the sample value, i.e. selecting at least two types having the highest probability of corresponding to the type of the recognised capsule, allows for example presenting such at least two types to a user that may then select manually the type that actually correspond to the type of the capsule.

Preferably, the capsule recognition module is configured to select three reference values out of the plurality of reference values, the three reference values being the three reference values from the plurality of reference values that resulted in the three scores indicating the highest probability of match with the sample value.

Preferably, the machine further comprises a user interface for displaying information to a user of the machine and receiving inputs from a user of the machine, wherein the machine is configured to display on the user interface information about the at least two types of capsule corresponding to the at least two selected reference values.

The user interface is preferably configured to allow a user of said machine selecting one of the at least two types of capsule.

The machine is preferably configured to control the extraction unit to extract such capsule using extraction parameters specifically adapted to a type of capsule selected by a user.

In embodiments, the capsule recognition module is a colour recognition module, the sensor is a colour sensor, the sample value is a sample colour vector characterizing a sample colour, the reference values are reference colour vectors each characterizing a reference colour, each reference colour corresponding to a type of capsule.

The colour recognition module is for example configured to compare the sample colour to each reference colour of the plurality of reference colours by:

-   computing a colour distance between the sample colour vector of the sample colour and a reference colour vector of the reference colour,

-   computing a chromaticity distance between a sample chromaticity vector of the sample colour and a reference chromaticity vector of the reference colour,

-   computing a score with the colour distance and the chromaticity distance to determine a probability of a match between the colour sample and the reference colour.

The colour recognition module is for example configured to compute the sample chromaticity vector from the sample colour vector. The sample colour vector and the reference colour vector are preferably three-dimensional RGB vectors.

The colour recognition module is for example configured to compute the score by computing a luminosity level of the sample colour and weighting the colour distance and the chromaticity distance by respective balance factors determined on the basis of the luminosity level.

The machine preferably comprises a capsule recognition position.

In embodiments, the machine further comprises a capsule detector for detecting the presence of a capsule located on or approaching a capsule feeder of the machine and triggering capsule recognition by the capsule recognition module.

In another aspect, the invention relates to a combination of such a machine and a capsule, e.g. such capsule being in the machine's extraction chamber or such capsule being handled by a capsule feeder of the machine.

In yet another aspect, the invention relates to a method of preparing and dispensing a beverage from a capsule in such a machine, the method comprising:

-   inserting a capsule in the machine;

-   sensing a property of at least part of such capsule and determining a sample value representative of the property of the capsule;

-   comparing the sample value to a plurality of reference values, wherein each reference value corresponds to a type of capsule, by, for each reference value of the plurality of reference values, computing a score representative of a probability of a match between the sample value and the reference value;

-   if a determination of the capsule type can be made with sufficient certainty, for example if a single reference value results in a score indicating a probability of match higher than a predefined threshold, determining that a recognised type of said capsule is the type corresponding to the respective reference value;

- if no determination of the capsule type can be made with sufficient certainty, for example because no reference value results in a score indicating a probability of match higher than said threshold, because more than one reference value results in a score indicating such a probability of match and/or because the reference value that resulted in the score indicating the highest probability of match corresponds to a capsule type that is known to be distinguishable only with difficulty from one or more other types of capsules, selecting at least two reference values, for example three, four or more reference values.

In still another aspect, the invention relates to a use of a capsule for such a machine, forming such a combination or carrying out such a method, whereby a type of the capsule is recognised by:

- sensing a property of at least part of such capsule and determining a sample value representative of the property of the capsule;

- comparing the sample value to a plurality of reference values, wherein each reference value corresponds to a type of capsule, by, for each reference value of the plurality of reference values, computing a score representative of a probability of a match between the sample value and the reference value;

- characterized in that the capsule recognition module is configured to:

- if a determination of the capsule type can be made with sufficient certainty, for example if a single reference value results in a score indicating a probability of match higher than a predefined threshold, determining that a recognised type of said capsule is the type corresponding to the respective reference value;

- if no determination of the capsule type can be made with sufficient certainty, for example because no reference value results in a score indicating a probability of match higher than said threshold, because more than one reference value results in a score indicating such a probability of match and/or because the reference value that resulted in the score indicating the highest probability of match corresponds to a capsule type that is known to be distinguishable only with difficulty from one or more other types of capsules, selecting at least two reference values, for example three, four or more reference values; selecting by a user or automatically by said machine one of said at least two reference values as corresponding to a recognised type of the capsule;

extracting the capsule (3) in the extraction chamber to prepare the beverage applying extraction parameters determined on the basis of the recognised type of the capsule.

Brief Description of the Drawings

The invention will now be described with reference to the schematic drawings, wherein:

- Figure 1 is a perspective view of a machine according to the invention;

- Figure 2 is a cross-sectional view of the machine shown in Fig. 1 with a capsule to be recognized and fed towards the machine's extraction chamber, and with a user-receptacle;

- Figure 3 illustrates the machine and capsule shown in Fig. 2 with the first and second parts that have been brought from their relatively close position into their relatively distant position;

- Figure 4 is a cross-sectional view of the machine and capsule of Fig. 3, the capsule having been released towards the extraction chamber; and

- Figure 5 illustrates the machine and capsule of Fig. 4, the released capsule having been immobilized between the first and second parts in their distant position;

- Figure 6 illustrates the machine and capsule of Fig. 5, the first and second parts having being relatively moved into their closed position to form the extraction chamber in which the capsule is housed, the liquid supplier supplying liquid into the extraction chamber to mix with a flavouring ingredient in the capsule and dispense it to the user-receptacle via the outlet;

- Figure 7 shows the machine and capsule of Fig. 6 after extraction of the capsule and after relatively moving the first and second parts into their distant position, the capsule being ejected into a waste collector and no new capsule being fed towards the machine's extraction chamber;

- Figure 8 illustrates a variation of the machine and capsule of Fig. 7 in which a new capsule is fed towards the machine's extraction chamber at the ejection of an extracted capsule;

- Figure 9 is a cross-sectional view of a capsule recognition module according to the invention and a capsule being recognised;

- Figure 10 is a cross-sectional view of the capsule recognition module of Fig. 9

- Figure 11 schematically illustrates an embodiment of the capsule recognition method of the invention.

Detailed description

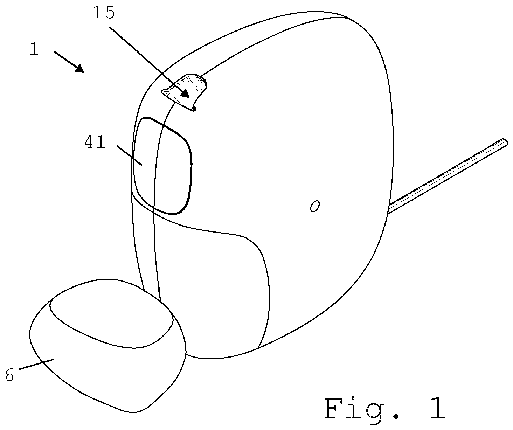

Figs 1 to 8 illustrate an exemplary embodiment of a beverage machine 1 according to the invention for preparing and dispensing a beverage 2, such as tea, coffee, hot chocolate, cold chocolate, milk, soup or baby food. The ingredient may be supplied in the form of an ingredient capsule 3, e.g. of the type described above under the header "Field of the Invention".

The sequence from Figs 1 to 8 illustrates a beverage preparation sequence in machine 1 from the supply of an ingredient capsule 3 to the removal of capsule 3 upon beverage preparation.

Machine 1 includes an extraction unit 10 for extracting beverage ingredient capsule 3 to form beverage 2. Extraction unit 10 for example has a first part 11 and a second part 12 that are relatively movable between a distant position for inserting and/or removing capsule 3 and a closed position, such as a closed position in which first and second parts 11,12 delimit an extraction chamber 100, for securing and extracting such capsule 3. For instance, at least one of parts 11,12 has a capsule opener e.g. one or more capsule piercers and/or at least one of said parts 11,12 has an opening for an inflow of liquid to be mixed with an ingredient contained in such capsule 3.

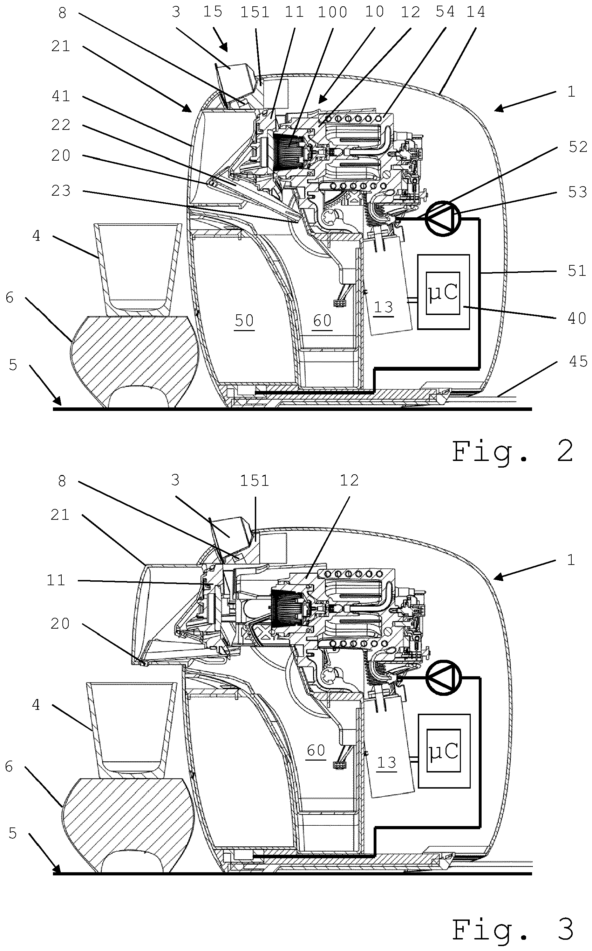

Machine 1 includes a control unit 40, schematically illustrated in Figs. 2-8, for controlling extraction unit 10 to extract capsule 3. Control unit 40 may be powered by the mains, e.g. via an electric cord 45, or by a DC source, e.g. battery such as a car battery or portable battery or machine battery.

Machine 1 has an outlet 20 for dispensing beverage 2 formed by extracting such capsule 3 to a user-receptacle 4, such as a cup or a mug, located in a receptacle placing area to collect beverage 2. Such area may be on a receptacle support 5,6 e.g. an external placement support 5 on which such machine 1 is located or a machine support 6 e.g. a movable or removable machine support 6, e.g. a machine support 6 that is located on or above an external placement support 5.

In embodiments, outlet 20 is for example fixed to or formed by or mounted to or mounted in a machine head 21 that has a deployed position in which outlet 20 is located above the receptacle placing area and a collapsed position in which outlet 20 is retracted within an external machine main housing 14. Machine head 21 may be driven inwards into and outwards out of the housing 14 by at least one of the first and second parts 11,12 or by an actuator controlled by the control unit.

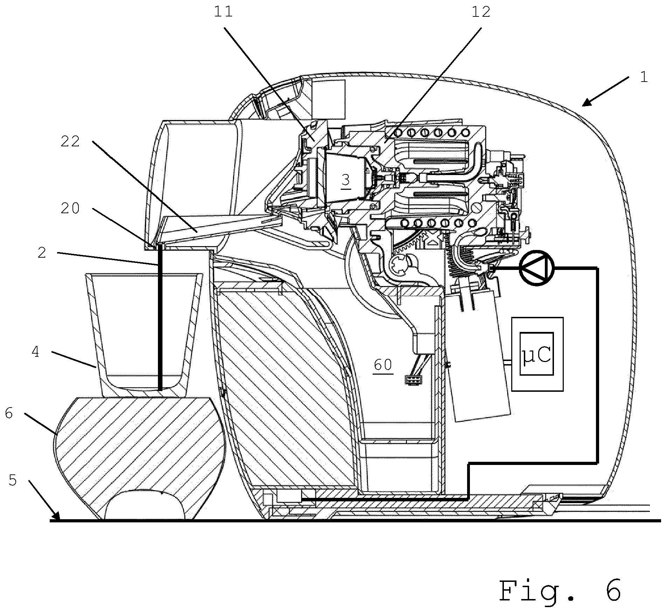

Outlet 20 can be fixed to or formed by or mounted to or mounted in a movable beverage guide 22 that has a beverage dispensing configuration illustrated for example on Fig. 6 to dispense beverage 2 to the receptacle placing area and a beverage stop configuration visible for example in Fig. 2 to prevent dispensing of beverage to the receptacle placing area, e.g. by draining residual beverage from guide 22 over a guide edge 23 to a waste receptacle 60. Guide 22 can be driven between the dispensing configuration and the stop configuration by at least one of first and second parts 11,12 or by a (or the above) machine head 21 or by an actuator controlled by the control unit.

Extraction unit 10 includes an actuator 13 configured to relatively move first and second parts 11,12 between their relatively distant and closed positions. Actuator 13 is connected to control unit 40 and controlled thereby to relatively move first and second parts 11,12.

Control unit 40 is connected to an input device for initiating and/or controlling the extraction unit 10. According to the invention, the input device comprises for example a user interface 41 and a capsule recognition module 8 to recognise a type of a capsule 3 ready to be inserted into the extraction unit 10. The input device optionally further comprises a capsule sensor for sensing the presence of a capsule 3 located in and/or approaching the extraction unit 10.

Extraction unit 10 may include a capsule feeder 15 for feeding a capsule 3 to extraction chamber 100. The capsule feeder 15 can have a capsule dispenser 151 with a release configuration for releasing the capsule 3 from the capsule feeder 15 towards the extraction chamber 100 and a retain configuration for retaining the capsule 3 away from the extraction chamber 100. The capsule feeder 15 can include a mechanical and/or magnetic capsule gate such as a capsule holder 151 e.g. matching at least part of an outer shape of the capsule 3.

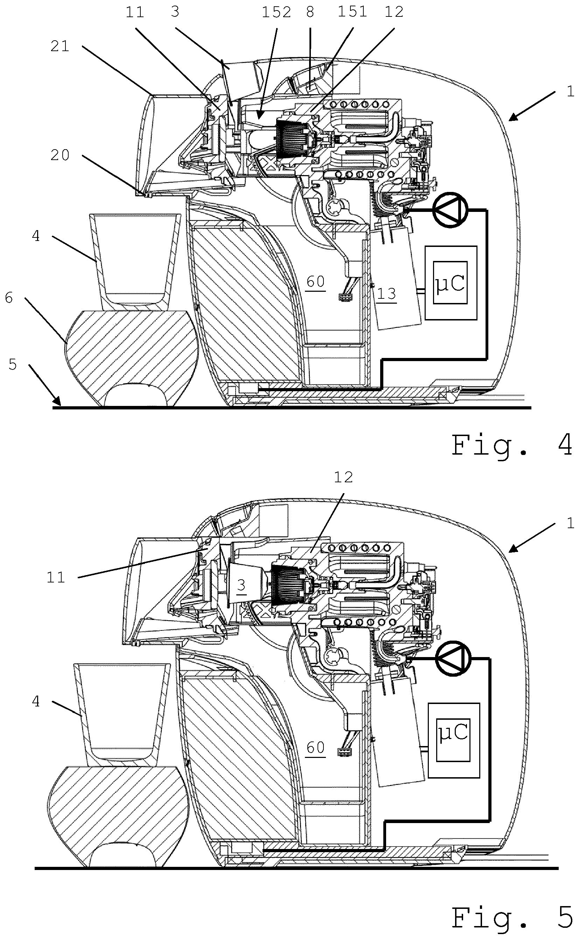

The capsule feeder 15 can have a passage 152 (Fig. 4) for guiding the capsule 3 to the extraction chamber 100 into a predetermined capsule orientation for its entry into the extraction chamber 100, such as a passage 152 associated with a capsule immobilizer for immobilizing the capsule 3 between the first and second parts 11,12 in their distant position (Fig. 5) prior to moving them relatively to each other into their closed position (Fig. 6).

The control unit 40 may control the capsule dispenser 151 to release the capsule 3 from the feeder 15 when the first and second parts 11,12 are in the distant position (Fig. 4) or when they are moving towards the distant position, for an entry of the capsule 3 into the extraction chamber 100 when the first and second parts 11,12 are brought back into their closed position (Fig. 6).

Control unit 40 may control capsule dispenser 151 to retain the capsule 3 at the feeder 15 and away from the extraction chamber 100 when the first and second parts 11,12 are: in the closed position or moving thereto (Fig. 2); or in the distant position and about to move to the closed position so as to leave insufficient time for the capsule 3, if it were released from the dispenser 151, to be received into the extraction chamber 100 prior to the first and second parts 11,12 reaching the closed position.

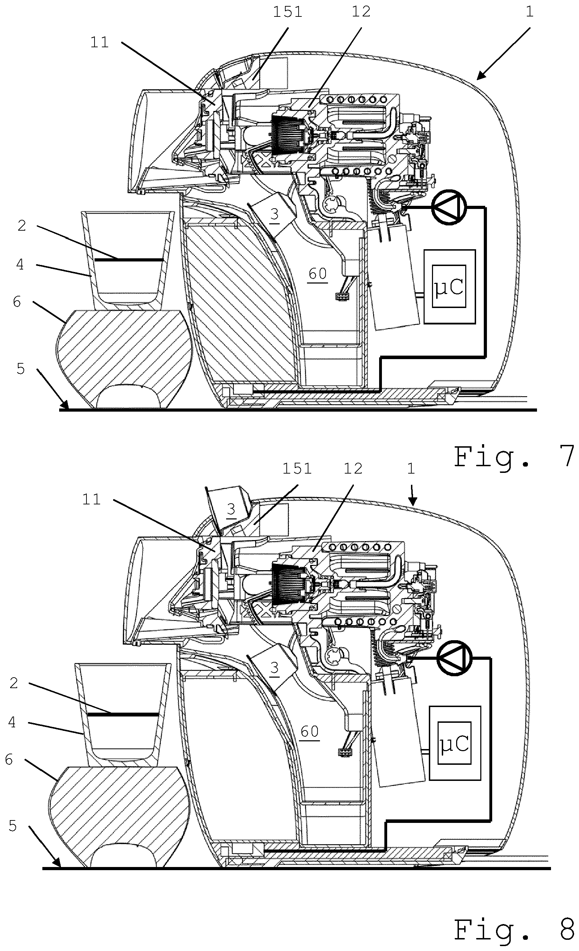

Optionally, the capsule feeder 15 may include or be associated with a capsule sensor connected to the control unit 40, which is for example configured to bring or maintain the capsule dispenser 151 in its retain configuration when the capsule sensor senses no capsule 3 on or at the capsule dispenser 151 (Fig. 7).

The control unit 40 may be configured to control the actuator 13 so that the first and second parts 11,12 are moved by the actuator 13 from the distant position into the closed position after a predetermined period of time has lapsed starting from a beverage preparation triggering event such as for example capsule detection, capsule recognition, user actuation of the machine's user interface, or reaching the distant position, or a combination thereof (Figs 2 to 6); For instance, the predetermined period of time is in the range of 3 to 15 sec, such as 5 to 12 sec, e.g. 7 to 10 sec.

The extraction unit 10 may include a liquid supplier 50,51,52,53,54 for supplying liquid, e.g. water, into the extraction chamber 100 (Fig. 2). The liquid supplier 50,51,52,53,54 can be connected to and controlled by the control unit 40 to supply liquid into the extraction chamber 100 and to interrupt such supply, for example automatically and/or manually via a user-interface 41 connected to the control unit 40.

For instance, the liquid supplier 50,51,52,53,54 includes one or more of: a source of liquid 50, such as a liquid tank or a liquid connector for connection to an external liquid provider; one or more liquid tubes 51,52 for guiding the liquid to the extraction chamber 100; a liquid driver 53, such as a pump, for driving the liquid into the extraction chamber 100; and a thermal conditioner 54, e.g. a heater and/or a cooler, such as an inline thermal conditioner, e.g. an inline flow conditioner, for thermally conditioning the liquid.

The control unit 40 can be configured to control the liquid supplier 50,51,52,53,54 to supply automatically the liquid into the extraction chamber 100 when the first and second parts 11,12 have reached their closed position with the capsule 3 housed in the extraction chamber 100 upon moving the first and second parts 11,12 from the distant to the closed positions so as to combine the liquid with an ingredient contained in the capsule 3 and form the beverage 2 for dispensing via the outlet 20. See Fig. 6.

The control unit 40 may be configured to control the liquid supplier 50,51,52,53,54 to supply automatically the liquid into the extraction chamber 100 when the first and second parts 11,12 have reached their closed position without any capsule housed in the extraction chamber 100 so as to rinse or clean at least part of the extraction unit 10 and optionally the outlet 20. For instance, the liquid supplier 50,51,52,53,54 is configured to supply liquid at a rinsing or cleaning temperature that is different to the temperature of such liquid for forming a beverage, e.g. by brewing.

In a particular embodiment, it is also contemplated to deliver cold or cooled beverages.

The control unit 40 can be configured to control the liquid supplier 50,51,52,53,54 not to supply automatically liquid into the extraction chamber 100 when the first and second parts 11,12 have reached their closed position without any capsule housed in the extraction chamber 100. For instance, the control unit 40 is configured to control the liquid supplier 50,51,52,53,54 to supply the liquid into the extraction chamber 100 upon sensing a corresponding manual user-input on a user-interface 41 connected to control unit 40.

According to the invention, the machine 1 includes a capsule recognition module 8 connected to the control unit 40 and configured to recognize a type of a capsule 3 fed or ready to be fed to the extraction chamber 100. As explained in more details further below, the capsule recognition module 8 recognizes a type of a capsule 3 by sensing a property of at least part of the surface of the capsule, and determining a sample value representative of this property for the capsule 3 to be recognized. The sensed property is for example a material of at least part of the capsule, an electrical property of at least part of the capsule such as for example a resistivity, an optical property, such as for example a colour, of at least part of the surface of the capsule 3, etc. The sample value is for example the name of a material, a resistivity value, an impedance value, a luminance value, a colour vector, for example a RGB colour vector, etc. For instance, the type can be selected from a plurality of capsule types extractible in extraction chamber 100 and each associated with a reference value of the sensed property. The corresponding reference values are preferably stored in an internal or external data storage means connected or connectable with the control unit 40.

According to the invention, the capsule recognition module 8 compares the sample value to a plurality of reference values, each reference value corresponding to a type of capsule that can be extracted in the machine 1. As will be explained later in details for example in the case of capsule colour recognition, the capsule recognition module 8 computes for each reference value a score representative of a probability of a match between the reference value and the sample value, i.e. of a match between the corresponding capsule type and the actual type of the capsule to be recognised.

If a determination of the capsule type can be made with sufficient certainty, for example if a single reference value results in a score indicating a probability of match higher than a predefined threshold, then the capsule recognition module 8 preferably determines that the capsule to be recognised is of the type corresponding to the respective reference value.

According to the invention, if no determination of the capsule type can be made with sufficient certainty, for example because no reference value results in a score indicating a probability of match higher than said threshold, because more than one reference value results in a score indicating such a probability of match and/or because the reference value that resulted in the score indicating the highest probability of match corresponds to a capsule type that is known to be distinguishable only with difficulty from one or more other types of capsules, then the capsule recognition module 8 preferably selects at least two reference values, for example three, four or more reference values.

In embodiments, if no determination of the capsule type can be made with sufficient certainty, the capsule recognition module 8 for example selects for displaying to a user the at least two reference values, for example the three, four five or more reference values, that resulted in a score indicating a highest probability of a match with the sample value. Alternatively or in combination thereof, the capsule recognition module 8 may select a predefined group of at least two reference values that correspond to capsule types that are difficult to distinguish from each other by the capsule recognition module. The capsule recognition module for example selects a predefined group of reference values comprising the reference value that resulted in a score indicating the highest probability of match with the sample value.

Information about the capsule types corresponding to the at least two capsule types selected by the capsule recognition module 8 are preferably displayed to a user of the machine. The information for example comprises a name of each selected capsule type, a picture of each selected capsule type, etc. The machine's user interface preferably comprises a display, for example a screen, to display the corresponding information to the user. The user interface is furthermore preferably configured to allow a user selecting one of the displayed capsule types, for example by pushing a corresponding button of the user interface, by selecting the corresponding displayed information on a touch screen, etc. Optionally, if the user doesn't make a selection of a capsule type within a predefined time frame, for example 5 to 30 seconds, then the machine, for example the capsule recognition module 8, automatically selects one of the displayed capsule type, for example the capsule type of the displayed capsule types whose reference value resulted in the score indicating the highest probability of a match with the sample value, the capsule type corresponding to a capsule type commonly consumed on the machine, etc.

The control unit 40 is preferably configured to control the liquid supplier 50,51,52,53,54 according to a liquid supply program associated with the selected type of capsule, such as a liquid supply program with one or more adjusted supplied liquid parameters selected from a liquid temperature, flow, pressure and volume that is/are constant or variable during an extraction of the recognised capsule 3.

The capsule recognition module 8 is preferably positioned in the vicinity of the capsule feeder 15, and more particularly, near, around and/or in the capsule dispenser 151, preferably in the immediate vicinity of a defined capsule recognition position.

The control unit 40 may have an end-of-extraction management program which is run automatically when the liquid supply is interrupted (e.g. when a predetermined extraction process is over or is detected as faulty) to:

- immediately relatively move first and second parts 11,12 into their distant position so as to remove any capsule 3 from inbetween the first and second parts 11,12; or
- to maintain the first and second parts 11,12 in the closed position during a predetermined period of time, e.g. in the range of 1 to 5 sec such as 2 to 3 sec, for allowing a manual request, e.g. via a user-interface 41 connected to control unit 40, to supply via the liquid supplier 50,51,52,53,54 an additional amount of liquid into extraction chamber 100 and, in the absence of such manual request during said predetermined period of time, to relatively move the first and second parts 11,12 into their distant position so as to remove any capsule 3 from inbetween the first and second parts 11,12, for instance to remove such capsule 3 into a used-capsule collector 60 formed by a (or the above) waste receptacle 60.

Optionally, prior to moving the first and second parts 11,12 into their closed position, the first and second parts 11,12 may remain into their distant position for a predetermined period of time, such as a period of time in the range of 1 to 6 sec. e.g. 2 to 4 sec, for allowing an insertion of a new capsule 3 inbetween the first and second parts 11,12 prior to relatively moving them into their closed position with new capsule 3 housed in the extraction chamber 100 for an extraction of the new capsule 3.

During use, the following steps can be carried out (Figs 1 to 6):

- placing a receptacle 4 in the receptacle placing area;

- placing a capsule 3 on the capsule feeder 15, preferably at a defined capsule recognition position;

- sensing by the capsule recognition module a property of the capsule 3 and determining a sample value representative of said property of the sensed capsule;

- comparing said sample value to a plurality of reference values, each reference value corresponding to a type of capsule that can be extracted in the machine,

- if a type of the sensed capsule can be determined with sufficient certainty, selecting a type of the sensed capsule corresponding to the reference value that resulted in the score indicating the highest probability of a match with the sample value;

- if a type of the sensed capsule can not be determined with sufficient certainty, determining at least two possible types of the capsule 3; displaying information relative to said at least two types to a user of the machine 3; selecting by a user or by the machine a type of the at least two types;

- relatively moving the first and second parts 11,12 into their distant position automatically, semiautomatically or manually;

- supplying the capsule 3 to the extraction unit 10;

- relatively moving the first and second parts 11,12 into their closed position to position the capsule 3 in the extraction chamber 100;

- extracting the capsule 3 in the extraction chamber 100 applying extraction parameters determined on the basis of the selected type of the capsule 3 to prepare a beverage 2; and

- dispensing the prepared beverage 2 via the outlet 20 to the receptacle 4.

According to the invention, the recognition module 8 is configured to determine a type of a capsule 3 inserted in or placed on the machine 1, for example of a capsule 3 placed by a user on the capsule feeder 15, preferably at a capsule recognition position, by recognising a property of the capsule 3, for example a colour of at least part of the capsule 3.

Machine 1 typically allows extracting capsules of different types in order to prepare different beverages and/or different beverage styles. The different types of capsules extractible in the extraction chamber 100 for example correspond to different ingredients contained therein and/or different ingredient conditioning. In embodiments, each type of capsule corresponds to a particular type of coffee, which differs from the coffee contained in capsules of other types for example, but not exclusively, in one or more of its origin, its roasting degree, its grounding level, its quantity contained in the capsule and/or its caffeine content. Alternatively or in combination thereof, different types of capsules extractible in the machine 1 correspond to ingredients for the preparation of different beverages, such as for example coffee, milk, soup, baby milk, tea, cold beverages, etc.

Preferably, each type of capsule is associated to a specific reference value of the sensed property. In embodiments, each type of capsule is for example associated to a reference colour of at least part of the capsule 3 thereby allowing for example a user visually differentiating capsules of different types. Reference values are preferably stored in an internal or external data storage means connected or connectable with control unit 40 and/or with recognition module 8. In the case of a colour recognition module, for example, data representative of the reference colours, for example reference colour vectors, typically one reference colour vector per reference colour, is preferably stored in internal or external data storage means connected or connectable with control unit 40 and/or with recognition module 8.

The machine 1 may be configured to extract each capsule 3 using preparation parameters specific to the particular type of the capsule 3. The preparation parameters for example include one or more of: a carrier liquid temperature, a carrier liquid volume, an extraction time, a carrier liquid pressure, a carrier liquid type, a number of successive preparation phases, etc. The preparation parameters for use with each type of capsule extractible in the machine 1 are preferably stored in an internal or external data storage means connected or connectable with the control unit 40 and/or with the colour recognition module 8. The appropriate preparation parameters are selected on the basis of the type of the capsule 3 selected by the user or by the capsule recognition module 8 and used by the control unit 40 for controlling the extraction of the recognised capsule 3.

The machine 1 may also be configured to store and/or to transmit to an external server information about the type of each capsule extracted in the machine, in order for example to monitor the capsule consumption at the machine 1.

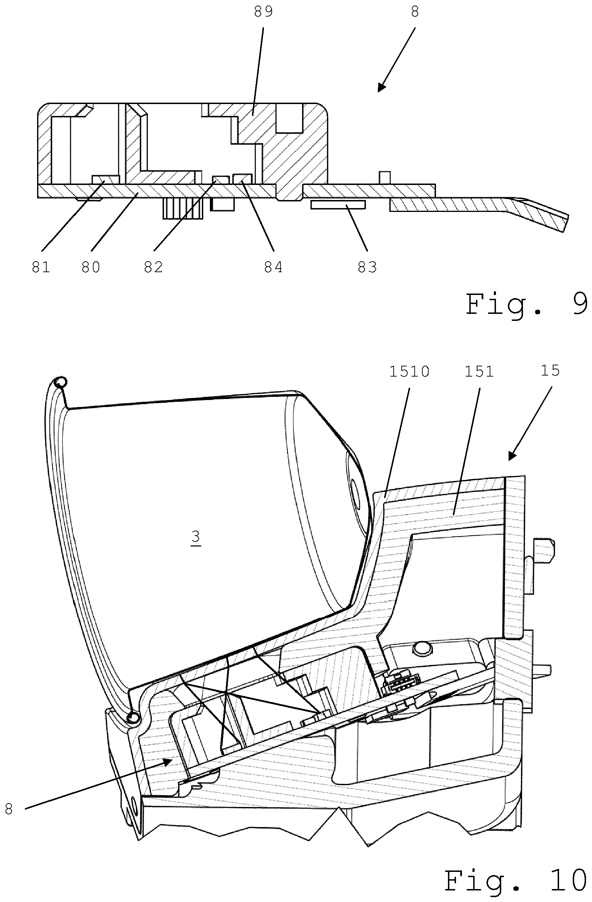

Figures 9 and 10 illustrate a preferred embodiment of the invention, wherein the capsule recognition module is a colour recognition module 8.

With reference to Fig. 9, the colour recognition module 8 comprises a source of light 82, for example a white LED or any other appropriate source of light, preferably with known and definite spectrum, and a colour sensor 81, for example a RGB sensor. The colour recognition module 8 further preferably comprises a controller 83, for example but not exclusively an ASIC or a programmable microcontroller, for controlling the source of light 82 and the colour sensor 81, for example for switching the source of light 82 on and off and/or for receiving and handling the signals from the colour sensor 81. The source of light 82, the colour sensor 81 and the controller 83 are preferably attached, for example soldered, to an electronic board 80, typically a PCB, providing them in a known manner with the necessary power and data connections and/or interconnections. The controller 83 is preferably connected to and controlled by the control unit 40 of the machine 1.

Preferably, the colour recognition module 8 further comprises a light guide 89 for guiding light emitted by the source of light 82 towards a target location and for limiting the light received by the colour sensor 81 preferably to the light reflected by an object located at the target location, for example at the capsule recognition position, in order to avoid sensing parasitic light, for example environmental light. The light guide 89 is for example in the form of a cover associated with, for example attached to, the electronic board 80 and at least partly covering the source of light 82 and/or the colour sensor 81. The cover comprises for example openings or other guiding means for guiding the light to and from the target location. In the illustrated example, cavities are formed in the cover above each of the colour sensor 81 and the source of light 82, which are open on their upper side. The inner walls of the cavities are preferably shaped in order to avoid reflections within the cavities that may lead to faulty lightning of the object located at the target location and/or faulty colour sensing of the light reflected by said object.

Optionally, the machine 1 comprises a capsule detector 84 for detecting a capsule located on or approaching the capsule feeder. The capsule detector 84 is for example comprised in the colour recognition module 8, preferably attached to, for example soldered on, the electronic board 80. Other dispositions of the capsule detector are however possible within the frame of the invention. The capsule detector 84 may be of any appropriate type, for example a presence and/or movement detector, such as an infrared (IR) detector, an inductive and/or resistive detector, a mechanical switching element, etc. The capsule detector 84 is for example controlled by the controller 83 of the colour recognition module 8 or directly controlled by the control unit of the machine.

In embodiments, the machine 1 further comprises a material detector, which is not represented on the figures, for detecting a material of a capsule located on or approaching the capsule feeder. The material detector is for example an inductor or a resistive element recognizing a metallic body of a capsule. The output of the material detector is for example sent to the controller 83 and used in conjunction with the output of the colour recognition module 8 as an additional criterion for determining a type of the capsule located on or approaching the capsule feeder, for example located in the capsule recognition position. The material detector may be an additional detector in addition to the optional capsule detector 84. Alternatively, a single detector, for example an inductive, capacitive or resistive detector, may be used as capsule detector and material detector.

Fig. 10 shows a capsule 3 placed in the capsule feeder 15 of the machine, typically in a defined capsule recognition position, before its introduction into the machine's extraction chamber. The colour recognition module 8 is preferably associated with or part of the capsule feeder 15. The colour recognition module 8 is for example attached to the capsule holder 151 and positioned such that the light emitted by the source of light 82 is directed towards the surface of a capsule 3 placed in the capsule feeder 15, for example at the capsule recognition position, and such that at least part of the light of the source of light 82 that is reflected by the surface of the capsule 3 is directed towards the colour sensor 81.

In the illustrated example, the colour recognition module 8 is attached under the capsule receiving surface of the capsule holder 151. A window is formed in the preferably opaque material of the capsule holder 151, which cooperates with the openings of the light guide 89 of the colour recognition module 8 for allowing light emitted by the source of light 82 to reach at least a part of the surface of a capsule 3 placed on the capsule holder 151, and for allowing light reflected by said surface to be received by the colour sensor 81.

The window formed in the preferably opaque material of the capsule holder 151 is preferably covered by a translucent material in order to protect the elements of the colour recognition module 8, in particular the colour sensor 81, the source of light 82 and the optional capsule detector 84, from external mechanical aggressions such as, but not exclusively, dirt, objects inserted in the window of the capsule holder 151, etc. In embodiments, the capsule receiving surface of the capsule holder 151 is covered with a semi-transparent skin 153 made for example of a rigid semi-transparent plastic material and shaped, for example moulded, to match the shape of the surface of the capsule 3 in order to provide a stable position to the capsule 3 when correctly placed on the capsule holder 151. In embodiments, the cover 153 is furthermore lightly tinted in order to at least partly hide the colour recognition module 8 and its elements to the view of a user of the machine while not significantly impairing colour sensing of the capsule 3 by the colour recognition module 8.

In embodiments, when a capsule 3 is approached to and/or placed in the capsule feeder 15, for example in the capsule recognition position, the optional capsule detector 84 detects the presence of the capsule 3 and sends a corresponding signal to the controller 83 and/or to the machine's control unit, which activate the source of light 82 to illuminate at least part of the surface of the capsule 3 located on the capsule holder 151, preferably at the capsule recognition position. The colour sensor 81 is in turn activated to sense a sample colour of the capsule 3 from the light reflected by said surface and received by the colour sensor 81. The sample colour is then compared with each reference colour, for example by the controller 83 of the colour recognition module 8 and/or by the machine's control unit, in order to determine a score indicative of a probability of a match between said sample colour and the corresponding reference colour. Alternatively, in particular if the machine does not comprise any capsule detector, the recognition module 8, in particular the source of light 82 and the colour sensor 81, is activated by a user actuation for example of the machine's user interface, for example by the activation of a beverage preparation command.

Preferably, the colour sensor 81 is an RGB (Red Green Blue) sensor that provides three raw values Rr, Gr, Br representing the primary colour repartition in incoming light received by photodiodes of the sensor. These three raw values are typically the result of the integration over a fixed period of time of the received light in the corresponding frequency ranges. The integration time is for example set to 200ms. The output values Rr, Gr, Br are for example represented on 19 bits and can take a value between 0 and 524287.

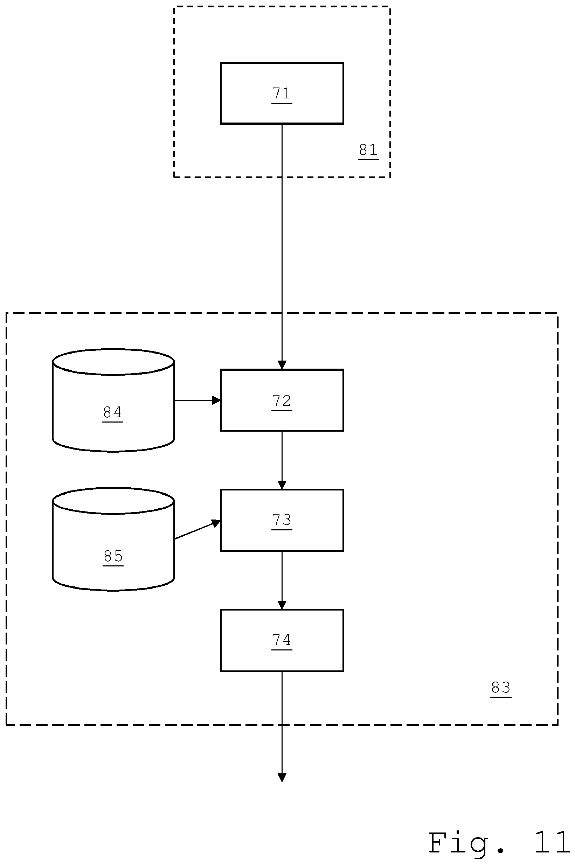

Fig. 11 schematically illustrates an embodiment of the capsule recognition method of the invention, wherein the capsule recognition module is a colour recognition module as described above.

In a first step 71, the colour sensor 81 senses as explained above a sample colour of at least part of the surface of a capsule located in the machine's capsule feeder, preferably in a capsule recognition position, and generates a raw sample colour vector of three raw values Rr, Gr, Br representative of the sensed sample colour.

In a next step 72, the raw sample colour vector is corrected with one or more calibration vectors specific to the individual machine, in particular to the actual characteristics of its colour recognition module, and stored in a memory storage of or accessible to the colour recognition module, for example in a memory storage 84 of or accessible to the controller 83.

The calibration vectors for example comprise a black balance calibration vector and a white balance calibration vector that are generated for each machine preferably at the end of the machine production line, once the machine, or at least the capsule feeder with the colour recognition module, is fully functional. In order to generate the calibration vectors, a reference colour sample, for example a reference black sample, is placed on the capsule feeder and its colour is sensed by the colour sensor 81 that generates a calibration vector, for example a black balance calibration vector Bref, with the corresponding three raw values generated by the sensor as a result of the sensing step, for example $Bref_{red}$, $Bref_{green}$ and $Bref_{blue}$. The same procedure is then preferably repeated with another reference colour sample, for example with a reference white sample, in order to generate a second calibration vector, for example a white balance calibration vector Wref ($Wref_{red}$, $Wref_{green}$, $Wref_{blue}$). The calibration vectors are then stored in the memory storage 84.

Correcting the raw sample colour vector with machine specific calibration vectors, in particular with a black balance calibration vector and a white balance calibration vector, generated as explained above allows compensating potentially large variations in colour sensing between individual machines, due for example to variations in the characteristics of each machine's source of light, colour sensor, skin transparency, light guide efficiency, etc. Correcting the raw sample colour vector from these machine specific variations allows achieving reliable and consistent capsule colour recognition across all machines.

In embodiments, the correction calculation is the calculation of the normalised distance of each primary colour raw value of the raw sample colour vector between the corresponding calibration values of the two calibration vectors, with an output range of for example 0 to 1000. The corrected sample colour vector R, G, B is thus for example computed according to the following formula:

$$R = \frac{(Rr - Bref_{red})}{(Wref_{red} - Bref_{red})} \cdot 1000$$

$$G = \frac{(Gr - Bref_{green})}{(Wref_{green} - Bref_{green})} \cdot 1000$$

$$B = \frac{(Br - Bref_{blue})}{(Wref_{blue} - Bref_{blue})} \cdot 1000$$

In a next step 73, the previously corrected sample colour vector (R,G,B) is compared, for example by the controller 83, to each reference colour vector stored in a look-up table 85 of or accessible to the controller 83, and a score representing the amount of difference between the sample colour vector and the at least one reference colour vector is computed.

In embodiments, the look-up table comprises a plurality of reference colour vector, typically one reference colour vector per known type of capsule. The sample colour vector is preferably compared individually to each reference colour vector of the look-up table 85 and a score is computed for each comparison. The reference colour vector which gives for example the lowest score represents the closest capsule type, i.e. the capsule type that has the highest probability of matching the type of the capsule to be recognised.

According to the invention, if a type of the sensed capsule can not be determined with sufficient certainty, for example because no reference value results in a score indicating a probability of match higher than a predefined threshold, because more than one reference value results in a score indicating such a probability of match and/or because the reference value that resulted in the score indicating the highest probability of match corresponds to a capsule type that is known to be distinguishable only with difficulty from one or more other types of capsules, the colour recognition module 8 preferably selects at least two reference colour vectors, for example three, four or more reference colour vectors.

In embodiments, if no determination of the capsule type can be made with sufficient certainty, the capsule recognition module 8 for example selects for displaying to a user the at least two reference colour vectors, for example the three, four five or more reference colour vectors, that resulted in a score indicating a highest probability of a match with the sample colour vector. Alternatively or in combination thereof, the capsule recognition module 8 may select a predefined group of at least two reference colour vectors that correspond to capsule types that are difficult to distinguish from each other by the colour recognition module 8. The colour recognition module for example selects a predefined group of reference colour vectors comprising the reference colour vector that resulted in a score indicating the highest probability of match with the sample colour vector.

Information about the capsule types corresponding to the at least two capsule types selected by the capsule recognition module 8 are preferably displayed to a user of the machine. The information for example comprises a name of each selected capsule type, a picture of each selected capsule type, etc. The machine's user interface preferably comprises a display, for example a screen, to display the corresponding information to the user. The user interface is furthermore preferably configured to allow a user selecting one of the displayed capsule types, for example by pushing a corresponding button of the user interface, by selecting the corresponding displayed information on a touch screen, etc. Optionally, if the user doesn't make a selection of a capsule type within a predefined time frame, for example 5 to 30 seconds, then the machine, for example the capsule recognition module 8, automatically selects one of the displayed capsule type, for example the capsule type of the displayed capsule types whose reference colour vector resulted in the score indicating the highest probability of a match with the sample colour vector, the capsule type corresponding to a capsule type commonly consumed on the machine, etc.

The score is for example computed by: computing a colour distance between the sample colour vector and the reference colour vector; computing a chromaticity distance between a sample chromaticity vector of the sample colour and a reference chromaticity vector of the reference colour; adding the colour distance and the chromaticity distance, each distance being optionally weighted by a respective factor depending on the luminosity of the sample colour, as will be explained further below.

The colour distance is preferably computed as the Euclidian distance between the sample colour vector and the reference colour vector. The colour distance is thus for example computed according to the following formula:

$$DistColour = \sqrt{\left(R - R_{ref}\right)^2 + \left(G - G_{ref}\right)^2 + \left(B - B_{ref}\right)^2},$$

where (R,G,B) is the sample colour vector and ($R_{ref}$,$G_{ref}$,$B_{ref}$) is the reference colour vector.

The chromaticity distance is preferably computed as the Euclidian distance between a sample chromaticity vector of the sample colour and a chromaticity reference vector of the reference colour.

Chromaticity vectors are computed according to the following formulas:

$$ChrR = \frac{R}{R + G + B}$$

$$ChrG = \frac{G}{R + G + B}$$

$$ChrB = \frac{B}{R + G + B}$$

for the sample chromaticity vector, and according to the following formulas:

$$ChrR_{ref} = \frac{R_{ref}}{R_{ref} + G_{ref} + B_{ref}}$$

$$ChrG_{ref} = \frac{G_{ref}}{R_{ref} + G_{ref} + B_{ref}}$$

$$ChrB_{ref} = \frac{B_{ref}}{R_{ref} + G_{ref} + B_{ref}}$$

for the reference chromaticity vector.

The chromaticity distance is thus for example computed according to the following formula:

$$DistChroma = \sqrt{\left(ChrR - ChrR_{ref}\right)^2 + \left(ChrG - ChrG_{ref}\right)^2 + \left(ChrB - ChrB_{ref}\right)^2},$$

where (ChrR,ChrG,ChrB) is the sample chromaticity vector and (ChrR$_{ref}$,ChrG$_{ref}$,ChrB$_{ref}$) is the reference chromaticity vector.

The chromaticity vectors are not sensitive to luminosity variations of the same colour, which may be frequent in the intended normal use of the colour recognition module of the invention, due for example to variations in ambient lightning around the beverage preparation machine, variations in the intensity of the source of light 82, etc. Using chromaticity vectors for comparing colours is thus generally more robust than using colour vectors.

A problem persists however with capsules of dark colours, where the chromaticity will vary a lot from one measurement to the next due to the generally small values of the nominators and the denominators of the fractions in the above formulas. The colour distance will thus generally provide more reliable results when comparing dark sample colours.

As a result of the comparison step 73, the score is computed from the colour distance and the chromaticity distance as a weighted sum of said distances according to the formula:

$$Score = DistColour * BalanceColour + DistChroma * BalanceChroma$$

where the weighting factors BalanceColour and BalanceChroma are preferably chosen depending on the luminosity of the colour sample calculated as:

$$Lum = \sqrt{R^2 + G^2 + B^2}$$

which is a value representative of the brightness or darkness of the sample colour.

Specific weighting factors may for example be determined for specific luminosity ranges such as: If $0<Lum<Th_1$, then BalanceColour=Lc and BalanceChroma=Lch If $Th_1<Lum<Th_2$, then BalanceColour=Mc and BalanceChroma=Mch If $Lum>Th_2$, then BalanceColour=Hc and BalanceChroma=Hch where Thi and $Th_2$ are a first and a second luminosity threshold value respectively; and Lc, Lch, Me, Mch, Hc, Hch are predefined values of weighting factors for low, medium and high sample colour luminosity respectively.

Other numbers of luminosity ranges are however possible within the frame of the invention, with respective predefined factors for each range, and/or the weighting factors may be calculated for each comparison step 73 as a function of the luminosity value of the sample colour. The function may for example be linear, exponential, logarithmic, or of any other type. Typically, the BalanceColour weighting factor is higher for sample colours of low luminosity than it is for sample colours of high luminosity, while the BalanceChroma weighting factor is lower for sample colours of low luminosity than it is for sample colours of high luminosity.

Experiments have shown for example good results with values of $Th_1$=70, $Th_2$=450, Lc=3, Lch=0.25, Mc=0.25, Mch=2.5, Hc=0.25 and Hch=5.

In embodiments, the sample colour is compared in the comparison step 73 to each reference colour stored in the lookup table 85 or otherwise known to the beverage preparation machine and a score is computed as a result of each comparison.

In a subsequent selection step 74, if a determination of the capsule type can be made with sufficient certainty, a type of capsule is selected that corresponding to the reference colour vector that resulted in the lowest score. If no determination of the capsule type can be made with sufficient certainty, more than one type of capsule are displayed or otherwise presented to a user of the machine 3, for example on the basis of the criteria explained before. The user selects one of the presented types and the selected type is used as output of the selection step 74. Optionally, if the user doesn't make any selection within a determined time frame, for example within 5 to 30 seconds after the capsule types have been presented to him or her, then the selection is made automatically by the machine, for example by the controller, that for example selects the type corresponding to the reference colour vector that resulted in the lowest score or the type that is most often extracted in the machine. The type of the sensed capsule is thus determined to be the type selected as a result of the selection step 74.

The result of the selection step 74, i.e. the selected type of the capsule, is then preferably transmitted to the control unit of the beverage preparation machine, which will open the passage 152 to allow the insertion of the capsule 3 in the extraction chamber 100, and control the various elements of the machine 1, in particular the thermal conditioner 54 and the liquid driver 53, to prepare a beverage 2 using parameters specifically adapted to the selected type of capsule.

The raw colour vector correction step 72, the comparison step 73 and the selection step 74 where described above as being performed essentially by the controller 83 of the colour recognition module 8. Other calculators of the machine 1 may however perform one or more of the above steps. In particular, some or all of the above steps may be performed for example by the colour sensor 81 and/or by the control unit 40 of the beverage preparation machine 1.

In embodiments, the result of the colour recognition method is further combined with the output of an optional material detector as an additional criterion to identify a type of capsule, in order for example to discriminate between capsules having the same or very similar colours, but being made of different materials, for example aluminium and plastic or paper, and possibly containing different ingredients requiring different processing by the machine.

The invention was described above in detail in the case of a colour recognition module sensing a colour of at least part of the surface of a capsule to be recognised. The method of the invention may however be applied to any type of capsule recognition module sensing a property of a capsule to be recognised and comparing it to reference property values, including for example a code reading module, a metal recognition module, an electrical property detector, an optical property detector, etc.

**Claims**

1. A machine (1) for preparing and dispensing a beverage (2), such as tea, coffee, hot chocolate, cold chocolate, milk, soup or baby food, such machine (1) comprising:

   - an extraction unit (10) for extracting a beverage ingredient capsule (3) to form said beverage (2), e.g. a unit (10) having a first part (11) and a second part (12) that are relatively movable between a distant position for inserting and/or removing a capsule (3) and a closed position, such as a closed position in which the first and second parts (11,12) delimit an extraction chamber (100), for securing and extracting such capsule (3), optionally at least one of said parts (11,12) has a capsule opener e.g. one or more capsule piercers and/or at least one of said parts (11,12) has an opening for an inflow of liquid to be mixed with an ingredient contained in such capsule (3);
   - a control unit (40) for controlling the extraction unit (10) to extract such capsule (3), such as a control unit powered by the mains e.g. via an electric cord (45);
   - an outlet (20) for dispensing said beverage (2) formed by extracting such capsule (3) to a user-receptacle (4), such as a cup or a mug, located in a receptacle placing area, such as on a receptacle support (5,6) e.g. an external placement support (5) on which such machine (1) is located or a machine support (6) e.g. a movable or removable machine support (6), to collect said beverage (2),
   - a capsule recognition module for recognizing a type of a capsule (3) inserted in said machine (1), the capsule recognition module comprising a sensor for sensing a property of at least part of such capsule (3) and determining a sample value representative of said property of such capsule;

wherein the capsule recognition module is configured to compare said sample value to a plurality of reference values, wherein each reference value corresponds to a type of capsule, by, for each reference value of said plurality of reference values, computing a score representative of a probability of a match between said sample value and said reference value;

**characterized in that** the capsule recognition module is configured to:

- if a determination of the capsule type can be made with sufficient certainty, for example if a single reference value results in a score indicating a probability of match higher than a predefined threshold, then the capsule recognition module determines that such capsule is of the type corresponding to the respective reference value;

- if no determination of the capsule type can be made with sufficient certainty, for example because no reference value results in a score indicating a probability of match higher than said threshold, because more than one reference value results in a score indicating such a probability of match and/or because the reference value that resulted in the score indicating the highest probability of match corresponds to a capsule type that is known to be distinguishable only with difficulty from one or more other types of capsules, then the capsule recognition module selects at least two reference values, for example three, four or more reference values.

2. The machine of claim 1, wherein the capsule recognition module is configured to select, if no determination of the capsule type can be made with sufficient certainty, three reference values out of said plurality of reference values, said three reference values being the three reference values from said plurality of reference values that resulted in the three scores indicating the highest probability of match with said sample value.

3. The machine of any one of the preceding claims, further comprising a user interface for displaying information to a user of said machine and receiving inputs from a user of said machine, wherein said machine is configured to display on said user interface, if no determination of the capsule type can be made with sufficient certainty, information about the at least two types of capsule corresponding to the at least two selected reference values.

4. The machine of claim 3, wherein said user interface is configured to allow a user of said machine selecting one of said at least two types of capsule.

5. The machine of claim 4, configured to control the extraction unit (10) to extract such capsule (3) using extraction parameters specifically adapted to a type of capsule selected by a user.

6. The machine of any one of the preceding claims, wherein: the capsule recognition module is a colour recognition module, the sensor is a colour sensor, the sample value is a sample colour vector characterizing a sample colour, the reference values are reference colour vectors each characterizing a reference colour, each reference colour corresponding to a type of capsule.

7. The machine of claim 6, wherein the colour recognition module is configured to compare said sample colour to each reference colour of said plurality of reference colours by:

- computing a colour distance between the sample colour vector of said sample colour and a reference colour vector of said reference colour,
- computing a chromaticity distance between a sample chromaticity vector of said sample colour and a reference chromaticity vector of said reference colour,
- computing a score with said colour distance and said chromaticity distance to determine a probability of a match between said colour sample and said reference colour.

8. The machine of claim 7, wherein said colour recognition module is configured to compute said sample chromaticity vector from said sample colour vector.

9. The machine of claim 7 or 8, wherein said sample colour vector and said reference colour vector are three-dimensional RGB vectors.

10. The machine of any one of claims 7 to 9, wherein said colour recognition module is configured to compute said score by computing a luminosity level of said sample colour and weighting said colour distance and said chromaticity distance by respective balance factors determined on the basis of said luminosity level.

11. The machine of any preceding claim, further comprising a capsule recognition position.

12. The machine of any preceding claim, further comprising a capsule detector (84) for detecting the presence of a capsule (3) located on or approaching a capsule feeder (15) of said machine (1) and triggering capsule recognition by the capsule recognition module.

13. A combination of a machine (1) according to any preceding claim and a capsule (3), e.g. such capsule (3) being in the machine's extraction chamber (100) or such capsule (3) being handled by a capsule feeder (15) of said machine (1).

14. A method of preparing and dispensing a beverage (2) from a capsule (3) in a machine as defined in any one of claims 1 to 12, comprising:

> - inserting a capsule (3) in said machine (1);
> - sensing a property of at least part of such capsule (3) and determining a sample value representative of said property of said capsule;
> - comparing said sample value to a plurality of reference values, wherein each reference value corresponds to a type of capsule, by, for each reference value of said plurality of reference values, computing a score representative of a probability of a match between said sample value and said reference value;
> - if a determination of the capsule type can be made with sufficient certainty, for example if a single reference value results in a score indicating a probability of match higher than a predefined threshold, determining that said capsule is of the type corresponding to the respective reference value;
> - if no determination of the capsule type can be made with sufficient certainty, for example because no reference value results in a score indicating a probability of match higher than said threshold, because more than one reference value results in a score indicating such a probability of match and/or because the reference value that resulted in the score indicating the highest probability of match corresponds to a capsule type that is known to be distinguishable only with difficulty from one or more other types of capsules, then selecting at least two reference values, for example three, four or more reference values.

15. A use of a capsule (3) for a machine as defined in any one of claims 1 to 12; or for forming a combination as defined in claim 13; or for carrying out a method as defined in claim 14,

> whereby a type of said capsule (3) is recognised by:
>
> > - sensing a property of at least part of such capsule (3) and determining a sample value representative of said property of said capsule;
> > - comparing said sample value to a plurality of reference values, wherein each reference value corresponds to a type of capsule, by, for each reference value of said plurality of reference values, computing a score representative of a probability of a match between said sample value and said reference value;
> > - if a determination of the capsule type can be made with sufficient certainty, for example if a single reference value results in a score indicating a probability of match higher than a predefined threshold, determining that a recognised type of said capsule is the type corresponding to the respective reference value;
> > - if no determination of the capsule type can be made with sufficient certainty, for example because no reference value results in a score indicating a probability of match higher than said threshold, because more than one reference value results in a score indicating such a probability of match and/or because the reference value that resulted in the score indicating the highest probability of match corresponds to a capsule type that is known to be distinguishable only with difficulty from one or more other types of capsules, then selecting at least two reference values, for example three, four or more reference values; selecting by a user or automatically by said machine one of said at least two reference values as corresponding to a recognised type of the capsule;
>
> extracting said capsule (3) in the extraction chamber (100) to prepare the beverage (2) applying extraction parameters determined on the basis of the recognised type of the capsule (3).

**Patentansprüche**

1. Maschine (1) zum Zubereiten und Ausgeben eines Getränks (2), wie Tee, Kaffee, heiße Schokolade, kalte Schokolade, Milch, Suppe oder Babynahrung, die Maschine (1) umfassend:

   - eine Extraktionseinheit (10) zum Extrahieren einer Getränkeinhaltsstoffkapsel (3), um das Getränk (2) auszubilden, z. B. eine Einheit (10), die einen ersten Teil (11) und einen zweiten Teil (12) aufweist, die zwischen einer entfernten Position zum Einsetzen und/oder Entfernen einer Kapsel (3) und einer geschlossenen Position, wie einer geschlossenen Position, in der das erste und das zweite Teil (11, 12) eine Extraktionskammer (100) zum Sichern und Extrahieren einer derartigen Kapsel (3) begrenzen, relativ bewegbar sind, wobei optional mindestens eines der Teile (11, 12) einen Kapselöffner aufweist, z. B. einen oder mehrere Kapseldurchstecher, und/oder mindestens eines der Teile (11, 12) eine Öffnung für einen Zufluss von Flüssigkeit aufweist, um mit einem Inhaltsstoff gemischt zu werden, der in der derartigen Kapsel (3) enthalten ist;
   - eine Steuereinheit (40) zum Steuern der Extraktionseinheit (10), um die derartige Kapsel (3) zu extrahieren, wie eine Steuereinheit, die durch das Stromnetz z. B. über ein Elektrokabel (45) mit Strom versorgt wird;
   - einen Auslass (20) zum Ausgeben des Getränks (2), das durch Extrahieren der derartigen Kapsel (3) ausgebildet wird, an einen Benutzerbehälter (4), wie eine Tasse oder einen Becher, der sich in einem Behälterplatzierungsbereich befindet, wie auf einem Behälterträger (5, 6), z. B. einem externen Platzierungsträger (5), auf dem sich eine derartige Maschine (1) befindet, oder einem Maschinenträger (6), z. B. einem bewegbaren oder entfernbaren Maschinenträger (6), um das Getränk (2) zu sammeln,
   - ein Kapselerkennungsmodul zum Erkennen einer Art einer Kapsel (3), die in die Maschine (1) eingesetzt wird, das Kapselerkennungsmodul umfassend einen Sensor zum Erfassen einer Eigenschaft von mindestens einem Teil der derartigen Kapsel (3) und Bestimmen eines Abtastwerts, der die Eigenschaft der derartigen Kapsel darstellt;

   wobei das Kapselerkennungsmodul konfiguriert ist, um den Abtastwert mit einer Vielzahl von Referenzwerten zu vergleichen, wobei jeder Referenzwert einer Kapselart entspricht, durch, für jeden Referenzwert der Vielzahl von Referenzwerten, Errechnen eines Werts, der eine Wahrscheinlichkeit einer Übereinstimmung zwischen dem Abtastwert und dem Referenzwert darstellt;
   **dadurch gekennzeichnet, dass** das Kapselerkennungsmodul konfiguriert ist zum:

   - falls eine Bestimmung der Kapselart mit ausreichender Sicherheit vorgenommen werden kann, zum Beispiel, falls ein einzelner Referenzwert zu einer Bewertung führt, die eine Wahrscheinlichkeit der Übereinstimmung höher als ein vordefinierter Schwellenwert angibt, dann das Kapselerkennungsmodul bestimmt, dass die derartige Kapsel zu der Art gehört, die dem jeweiligen Referenzwert entspricht;
   - falls keine Bestimmung der Kapselart mit ausreichender Sicherheit vorgenommen werden kann, zum Beispiel weil kein Referenzwert zu einer Bewertung führt, die eine Wahrscheinlichkeit der Übereinstimmung höher als der Schwellenwert angibt, weil mehr als ein Referenzwert zu einer Bewertung führt, die eine derartige Wahrscheinlichkeit der Übereinstimmung angibt, und/oder weil der Referenzwert, der zu der Bewertung führte, die die höchste Wahrscheinlichkeit der Übereinstimmung angibt, einer Kapselart entspricht, die bekanntermaßen nur schwer von einer oder mehreren anderen Arten von Kapseln unterscheidbar ist, dann das Kapselerkennungsmodul mindestens zwei Referenzwerte auswählt, zum Beispiel drei, vier oder mehr Referenzwerte.

2. Maschine nach Anspruch 1, wobei das Kapselerkennungsmodul konfiguriert ist, um, falls keine Bestimmung der Kapselart mit ausreichender Sicherheit vorgenommen werden kann, drei Referenzwerte aus der Vielzahl von Referenzwerten auszuwählen, wobei die drei Referenzwerte die drei Referenzwerte aus der Vielzahl von Referenzwerten sind, die zu den drei Bewertungen führen, die die höchste Wahrscheinlichkeit der Übereinstimmung mit dem Abtastwert angeben.

3. Maschine nach einem der vorstehenden Ansprüche, ferner umfassend eine Benutzerschnittstelle zum Anzeigen von Informationen an einen Benutzer der Maschine und Empfangen von Eingaben von einem Benutzer der Maschine, wobei die Maschine konfiguriert ist, um auf der Benutzerschnittstelle, falls keine Bestimmung der Kapselart mit ausreichender Sicherheit vorgenommen werden kann, Informationen über die mindestens zwei Arten von Kapseln anzuzeigen, die den mindestens zwei ausgewählten Referenzwerten entsprechen.

4. Maschine nach Anspruch 3, wobei die Benutzerschnittstelle konfiguriert ist, um es einem Benutzer der Maschine zu ermöglichen, einen der mindestens zwei Kapselarten auszuwählen.

**5.** Maschine nach Anspruch 4, die konfiguriert ist, um die Extraktionseinheit (10) zu steuern, um die derartige Kapsel (3) unter Verwendung von Extraktionsparametern zu extrahieren, die an eine Kapselart spezifisch angepasst sind, die durch den Benutzer ausgewählt wird.

**6.** Maschine nach einem der vorstehenden Ansprüche, wobei: das Kapselerkennungsmodul ein Farberkennungsmodul ist, der Sensor ein Farbsensor ist, der Abtastwert ein Abtastfarbvektor ist, der eine Abtastfarbe kennzeichnet, wobei die Referenzwerte Referenzfarbvektoren sind, die jeweils eine Referenzfarbe kennzeichnen, wobei jede Referenzfarbe einer Kapselart entspricht.

**7.** Maschine nach Anspruch 6, wobei das Farberkennungsmodul konfiguriert ist, um die Abtastfarbe mit jeder Referenzfarbe der Vielzahl von Referenzfarben zu vergleichen durch:

- Errechnen eines Farbabstands zwischen dem Abtastfarbvektor der Abtastfarbe und einem Referenzfarbvektor der einen Referenzfarbe,
- Errechnen eines Chromatizitätsabstands zwischen einem Abtastchromatizitätsvektor der Abtastfarbe und einem Referenzchromatizitätsvektor der einen Referenzfarbe,
- Errechnen einer Bewertung mit dem Farbabstand und dem Chromatizitätsabstand, um eine Wahrscheinlichkeit einer Übereinstimmung zwischen der Farbabtastung und der Referenzfarbe zu bestimmen.

**8.** Maschine nach Anspruch 7, wobei das Farberkennungsmodul konfiguriert ist, um den Abtastchromatizitätsvektor anhand des Abtastfarbvektors zu errechnen.

**9.** Maschine nach Anspruch 7 oder 8, wobei der Abtastfarbvektor und der Referenzfarbvektor dreidimensionale RGB-Vektoren sind.

**10.** Maschine nach einem der Ansprüche 7 bis 9, wobei das Farberkennungsmodul konfiguriert ist, um die Wertung durch Errechnen eines Helligkeitsniveaus der Abtastfarbe und Gewichten des Farbabstands und des Chromatizitätsabstands durch jeweiligen Ausgleichsfaktoren zu errechnen, die basierend auf dem Helligkeitsniveau bestimmt werden.

**11.** Maschine nach einem der vorstehenden Ansprüche, ferner umfassend eine Kapselerkennungsposition.

**12.** Maschine nach einem der vorstehenden Ansprüche, ferner umfassend einen Kapselerfasser (84) zum Erfassen des Vorhandenseins einer Kapsel (3), die sich auf einer Kapselzuführung (15) der Maschine (1) befindet oder sich dieser nähert, und zum Auslösen der Kapselerkennung durch das Kapselerkennungsmodul.

**13.** Kombination aus einer Maschine (1) nach einem der vorstehenden Ansprüche und einer Kapsel (3), z. B. der derartigen Kapsel (3), die sich in der Extraktionskammer (100) der Maschine befindet, oder der derartigen Kapsel (3), die durch eine Kapselzuführung (15) der Maschine (1) gehandhabt wird.

**14.** Verfahren zum Zubereiten und Ausgeben eines Getränks (2) aus einer Kapsel (3) in einer Maschine nach einem der Ansprüche 1 bis 12, umfassend:

- Einsetzen einer Kapsel (3) in die Maschine (1);
- Erfassen einer Eigenschaft von mindestens einem Teil der derartigen Kapsel (3) und Bestimmen eines Abtastwerts, der die Eigenschaft der Kapsel darstellt;
- Vergleichen des Abtastwerts mit einer Vielzahl von Referenzwerten, wobei jeder Referenzwert einer Kapselart entspricht, durch, für jeden Referenzwert der Vielzahl von Referenzwerten, Errechnen eines Werts, der eine Wahrscheinlichkeit einer Übereinstimmung zwischen dem Abtastwert und dem Referenzwert darstellt;
- falls eine Bestimmung der Kapselart mit ausreichender Sicherheit vorgenommen werden kann, zum Beispiel, falls ein einzelner Referenzwert zu einer Bewertung führt, die eine Wahrscheinlichkeit der Übereinstimmung höher als ein vordefinierter Schwellenwert angibt, Bestimmen, dass die Kapsel zu der Art gehört, die dem jeweiligen Referenzwert entspricht;
- falls keine Bestimmung der Kapselart mit ausreichender Sicherheit vorgenommen werden kann, zum Beispiel weil kein Referenzwert zu einer Bewertung führt, die eine Wahrscheinlichkeit der Übereinstimmung höher als der Schwellenwert angibt, weil mehr als ein Referenzwert zu einer Bewertung führt, die eine derartige Wahrscheinlichkeit der Übereinstimmung angibt, und/oder weil der Referenzwert, der zu der Bewertung führte, die die höchste Wahrscheinlichkeit der Übereinstimmung angibt, einer Kapselart entspricht, die bekanntermaßen nur schwer von einer oder mehreren anderen Arten von Kapseln unterscheidbar ist, dann Auswählen von mindestens zwei Referenzwerten, zum Beispiel drei, vier oder mehr Referenzwerten.

**15.** Verwendung einer Kapsel (3) für eine Maschine wie in einem der Ansprüche 1 bis 12 definiert; oder zum Ausbilden einer Kombination wie in Anspruch 13 definiert; oder zum Ausführen eines Verfahrens wie in Anspruch 14 definiert,

wobei eine Art der Kapsel (3) erkannt wird durch:

- Erfassen einer Eigenschaft von mindestens einem Teil der derartigen Kapsel (3) und Bestimmen eines Abtastwerts, der die Eigenschaft der Kapsel darstellt;
- Vergleichen des Abtastwerts mit einer Vielzahl von Referenzwerten, wobei jeder Referenzwert einer Kapselart entspricht, durch, für jeden Referenzwert der Vielzahl von Referenzwerten, Errechnen eines Werts, der eine Wahrscheinlichkeit einer Übereinstimmung zwischen dem Abtastwert und dem Referenzwert darstellt;
- falls eine Bestimmung der Kapselart mit ausreichender Sicherheit vorgenommen werden kann, zum Beispiel, falls ein einzelner Referenzwert zu einer Bewertung führt, die eine Wahrscheinlichkeit der Übereinstimmung höher als ein vordefinierter Schwellenwert angibt, Bestimmen, dass eine erkannte Art der Kapsel die Art ist, die dem jeweiligen Referenzwert entspricht;
- falls keine Bestimmung der Kapselart mit ausreichender Sicherheit vorgenommen werden kann, zum Beispiel weil kein Referenzwert zu einer Bewertung führt, die eine Wahrscheinlichkeit der Übereinstimmung höher als der Schwellenwert angibt, weil mehr als ein Referenzwert zu einer Bewertung führt, die eine derartige Wahrscheinlichkeit der Übereinstimmung angibt, und/oder weil der Referenzwert, der zu der Bewertung führte, die die höchste Wahrscheinlichkeit der Übereinstimmung angibt, einer Kapselart entspricht, die bekanntermaßen nur schwer von einer oder mehreren anderen Arten von Kapseln unterscheidbar ist, dann Auswählen von mindestens zwei Referenzwerten, zum Beispiel drei, vier oder mehr Referenzwerten; Auswählen durch einen Benutzer oder automatisch durch die Maschine eines der mindestens zwei Referenzwerte, als einer erkannten Art der Kapsel entsprechend;

Extrahieren der Kapsel (3) in der Extraktionskammer (100), um das Getränk (2) unter Anwendung von Extraktionsparametern, die basierend auf der erkannten Art der Kapsel (3) bestimmt werden, zuzubereiten.

## Revendications

**1.** Machine (1) de préparation et de distribution d'une boisson (2) telle que thé, café, chocolat chaud, chocolat froid, lait, soupe ou aliment pour bébé, une telle machine (1) comprenant :

- une unité d'extraction (10) pour extraire une capsule d'ingrédient de boisson (3) pour former ladite boisson (2), par exemple une unité (10) présentant une première partie (11) et une seconde partie (12) qui sont relativement mobiles entre une position distante pour insérer et/ou enlever une capsule (3) et une position proche, de sorte qu'une position proche dans laquelle les première et seconde parties (11, 12) délimitent une chambre d'extraction (100), pour assurer et extraire ladite capsule (3), éventuellement au moins une desdites parties (11, 12) présente un système d'ouverture de capsule, par exemple un ou plusieurs perceurs de capsules et/ou au moins une desdites parties (11, 12) présente une ouverture d'entrée de liquide à mélanger avec un ingrédient contenu dans ladite capsule (3) ;
- une unité de commande (40) pour commander l'unité d'extraction (10) pour extraire une telle capsule (3), telle qu'une unité de commande alimentée par le secteur, par exemple, par l'intermédiaire d'un câble électrique (45) ;
- une sortie (20) de distribution de ladite boisson (2) formée par extraction d'une telle capsule (3) dans un récipient de l'utilisateur (4), comme une tasse ou un mug, situé dans une zone de pose de récipient, telle qu'un support de récipient (5, 6), par exemple un support de pose externe (5) sur lequel cette machine (1) est située ou un support de machine (6), par exemple un support de machine mobile ou amovible (6) pour recueillir ladite boisson (2),
- un module de reconnaissance de capsule pour reconnaître un type d'une capsule (3) insérée dans ladite machine (1), le module de reconnaissance de capsule comprenant un capteur pour détecter une propriété d'au moins une partie d'une telle capsule (3) et déterminer une valeur d'échantillon représentative de ladite propriété de telle capsule ;

dans laquelle le module de reconnaissance de capsules est configuré pour comparer ladite valeur d'échantillon à une pluralité de valeurs de référence, dans laquelle chaque valeur de référence correspond à un type de capsule, par, pour chaque valeur de référence de ladite pluralité de valeurs de référence, le calcul d'un score représentatif d'une probabilité d'une correspondance entre ladite valeur d'échantillon et ladite valeur de référence ;

**caractérisé en ce que** le module de reconnaissance de capsules est configuré pour :

- si une détermination du type de capsule peut être faite avec une certitude suffisante, par exemple si une valeur de référence unique entraîne un score indiquant une probabilité de correspondance supérieure à un seuil prédéfini, alors le module de reconnaissance de capsule détermine qu'une telle capsule est du type correspondant à la valeur de référence respective ;
- si aucune détermination du type de capsule ne peut être faite avec une certitude suffisante, par exemple parce qu'aucune valeur de référence ne résulte d'un score indiquant une probabilité de correspondance supérieure audit seuil, parce que plus d'une valeur de référence se traduit par un score indiquant une telle probabilité de correspondance et/ou parce que la valeur de référence qui a abouti au score indiquant la probabilité de correspondance la plus élevée correspond à un type de capsule qui est connu pour ne distinguer que la difficulté d'un ou plusieurs autres types de capsules, alors le module de reconnaissance de capsules sélectionne au moins deux valeurs de référence, par exemple trois, quatre ou plus de quatre valeurs de référence.

2. Machine selon la revendication 1, dans laquelle le module de reconnaissance de capsules est configuré pour sélectionner, si aucune détermination du type de capsule ne peut être faite avec certitude suffisante, trois valeurs de référence parmi ladite pluralité de valeurs de référence, lesdites trois valeurs de référence étant les trois valeurs de référence à partir de ladite pluralité de valeurs de référence qui ont abouti aux trois scores indiquant la probabilité la plus élevée de correspondance avec ladite valeur d'échantillon.

3. Machine selon l'une quelconque des revendications précédentes, comprenant en outre une interface utilisateur pour afficher des informations à un utilisateur de ladite machine et recevoir des entrées provenant d'un utilisateur de ladite machine, dans laquelle ladite machine est configurée pour afficher sur ladite interface utilisateur, si aucune détermination du type de capsule ne peut être effectuée avec une certitude suffisante, des informations concernant les au moins deux types de capsules correspondant aux au moins deux valeurs de référence sélectionnées.

4. Machine selon la revendication 3, dans laquelle ladite interface utilisateur est configurée pour permettre à un utilisateur de ladite machine de sélectionner un desdits au moins deux types de capsule.

5. Machine selon la revendication 4, configurée pour commander l'unité d'extraction (10) pour extraire une telle capsule (3) en utilisant des paramètres d'extraction spécifiquement adaptés à un type de capsule choisi par un utilisateur.

6. Machine selon l'une quelconque des revendications précédentes, dans laquelle : le module de reconnaissance de capsule est un module de reconnaissance de couleur, le capteur est un capteur de couleur, la valeur d'échantillon est un vecteur de couleur d'échantillon caractérisant une couleur d'échantillon, les valeurs de référence sont des vecteurs de couleur de référence caractérisant chacun une couleur de référence, chaque couleur de référence correspondant à un type de capsule.

7. Machine selon la revendication 6, dans laquelle le module de reconnaissance de couleur est configuré pour comparer ladite couleur d'échantillon à chaque couleur de référence de ladite pluralité de couleurs de référence :

- en calculant une distance de couleur entre un vecteur de couleur d'échantillon de ladite couleur d'échantillon et un vecteur de couleur de référence de ladite au moins une couleur de référence,
- en calculant une distance de chromaticité entre un vecteur de chromaticité d'échantillon de ladite couleur d'échantillon et un vecteur de chromaticité de référence de ladite au moins une couleur de référence,
- en calculant un score avec ladite distance de couleur et ladite distance de chromaticité pour déterminer une probabilité d'une correspondance entre ledit échantillon de couleur et ladite couleur de référence.

8. Machine selon la revendication 7, dans laquelle ledit module de reconnaissance de couleur est configuré pour calculer ledit vecteur de chromaticité d'échantillon à partir dudit vecteur de couleur d'échantillon.

9. Machine selon la revendication 7 ou 8, dans laquelle ledit vecteur de couleur d'échantillon et ledit vecteur de couleur de référence sont des vecteurs RVB tridimensionnels.

**10.** Machine selon l'une quelconque des revendications 7 à 9, dans laquelle ledit module de reconnaissance de couleur est configuré pour calculer ledit score en calculant un niveau de luminosité de ladite couleur d'échantillon et en pondérant ladite distance de couleur et ladite distance de chromaticité par des facteurs d'équilibrage respectifs déterminés sur la base dudit niveau de luminosité.

**11.** Machine selon une quelconque revendication précédente, comprenant en outre une position de reconnaissance de capsule.

**12.** Machine selon l'une quelconque revendication précédente, comprenant en outre un détecteur de capsule (84) pour détecter la présence d'une capsule (3) située sur ou en approche d'un dispositif d'alimentation de capsule (15) de ladite machine (1) et en déclenchant une reconnaissance de couleur par le module de reconnaissance de couleur.

**13.** Combinaison d'une machine (1) selon l'une quelconque revendication précédente et d'une capsule (3), par exemple une telle capsule (3) se trouvant dans la chambre d'extraction (100) de la machine, ou ladite capsule (3) étant manipulée par un dispositif d'alimentation de capsule (15) de ladite machine (1).

**14.** Procédé de préparation et de distribution d'une boisson (2) à partir d'une capsule (3) dans une machine comme défini selon l'une quelconque des revendications 1 à 12, comprenant :

- l'insertion d'une capsule (3) dans ladite machine (1) ;
- la détection d'une propriété d'au moins une partie d'une telle capsule (3) et la détermination d'une valeur d'échantillon représentative de ladite propriété de ladite capsule ;
- la comparaison de ladite valeur d'échantillon à une pluralité de valeurs de référence, dans lequel chaque valeur de référence correspond à un type de capsule, par, pour chaque valeur de référence de ladite pluralité de valeurs de référence, le calcul d'un score représentatif d'une probabilité d'une correspondance entre ladite valeur d'échantillon et ladite valeur de référence ;
- si une détermination du type de capsule peut être faite avec une certitude suffisante, par exemple si une valeur de référence unique entraîne un score indiquant une probabilité de correspondance supérieure à un seuil prédéfini, la détermination que ladite capsule est du type correspondant à la valeur de référence respective ;
- si aucune détermination du type de capsule ne peut être faite avec une certitude suffisante, par exemple parce qu'aucune valeur de référence ne résulte d'un score indiquant une probabilité de correspondance supérieure audit seuil, parce que plus d'une valeur de référence entraîne un score indiquant une telle probabilité de correspondance et/ou parce que la valeur de référence qui a abouti au score indiquant la probabilité la plus élevée de correspondance correspond à un type de capsule qui est connu pour ne distinguer que la difficulté d'un ou plusieurs autres types de capsules, la sélection, alors, d'au moins deux valeurs de référence, par exemple trois, quatre ou plus de quatre valeurs de référence.

**15.** Utilisation d'une capsule (3) pour une machine telle que définie dans l'une quelconque des revendications 1 à 12 ; ou la formation d'une combinaison telle que définie dans la revendication 13 ; ou la réalisation d'un procédé tel que défini dans la revendication 14,

moyennant quoi un type de ladite capsule (3) est reconnu par :

- la détection d'une propriété d'au moins une partie de cette capsule (3) et la détermination d'une valeur d'échantillon représentative de ladite propriété de ladite capsule ;
- la comparaison de ladite valeur d'échantillon à une pluralité de valeurs de référence, chaque valeur de référence correspondant à un type de capsule, par, pour chaque valeur de référence de ladite pluralité de valeurs de référence, le calcul d'un score représentatif d'une probabilité d'une correspondance entre ladite valeur d'échantillon et ladite valeur de référence ;
- si une détermination du type de capsule peut être faite avec une certitude suffisante, par exemple si une seule valeur de référence aboutit à un score indiquant une probabilité de correspondance supérieure à un seuil prédéfini, la détermination qu'un type reconnu de ladite capsule est le type correspondent à la valeur de référence respective ;
- si aucune détermination du type de capsule ne peut être faite avec une certitude suffisante, par exemple parce qu'aucune valeur de référence ne résulte d'un score indiquant une probabilité de correspondance supérieure audit seuil, parce que plus d'une valeur de référence se traduit par un score indiquant une telle probabilité de correspondance et/ou parce que la valeur de référence qui a abouti au score indiquant la probabilité de correspondance la plus élevée correspond à un type de capsule qui est connu pour ne distinguer que la difficulté d'un ou plusieurs autres types de capsules, la sélection, ensuite, d'au moins deux valeurs de référence, par example trois, quatre ou plus de valeurs de référence ; la sélection par un utilisateur ou automatiquement par ladite machine d'une desdites au moins deux valeurs de référence comme correspondent à un type reconnu de la capsule ;

l'extraction de ladite capsule (3) dans la chambre d'extraction (100) pour préparer la boisson (2) en appliquant des paramètres d'extraction déterminés sur la base du type reconnu de la capsule (3).

Fig. 1

Fig. 2

Fig. 3

Fig. 4

Fig. 5

Fig. 6

Fig. 7

Fig. 8

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009043630 A
- WO 0115581 A
- WO 0243541 A
- WO 2010015427 A
- WO 2010128109 A
- WO 2011144719 A
- WO 2012032019 A
- EP 1867260 A
- WO 2005004683 A
- WO 2007135136 A
- WO 2008138710 A
- WO 2009074550 A
- WO 2009074553 A
- WO 2009074555 A
- WO 2009074557 A
- WO 2009074559 A
- WO 2010037806 A
- WO 2011042400 A
- WO 2011042401 A
- WO 2011144720 A
- EP 2014195046 A
- EP 2014195048 A
- EP 2014195067 A
- EP 1767129 A
- WO 2012093107 A
- WO 2013127906 A
- WO 2012025258 A
- WO 2012025259 A
- WO 2013127476 A
- AT 410377
- CH 682798
- DE 4429353
- DE 20200419
- DE 202006019039
- DE 2007008590
- EP 1448084 A
- EP 1676509 A
- EP 08155851
- FR 2624844
- GB 2397510 A
- US 4377049 A
- US 4458735 A
- US 4554419 A
- US 4767632 A
- US 4954697 A
- US 5312020 A
- US 5335705 A
- US 5372061 A
- US 5375508 A
- US 5645230 A
- US 5685435 A
- US 5731981 A
- US 5836236 A
- US 5959869 A
- US 6182555 B
- US 6354341 B
- US 6759072 B
- US 20070157820 A
- WO 9725634 A
- WO 9950172 A
- WO 2004030435 A
- WO 2004030438 A
- WO 2006063645 A
- WO 2006090183 A
- WO 2007003062 A
- WO 2007003990 A
- WO 2008104751 A
- WO 2008138820 A
- WO 2010003932 A
- WO 2012123440 A
- WO 2019154527 A1
- WO 2008037642 A
- WO 2013026843 A
- CH 605293
- WO 03059778 A
- EP 0512470 A
- EP 2068684 A
- WO 2014076041 A
- EP 0549887 A
- EP 1440639 A
- EP 1731065 A
- US 5161455 A
- US 5353692 A
- WO 2009135869 A
- WO 2011154492 A
- WO 2012007313 A
- WO 2013186339 A
- WO 2016096705 A
- WO 2016096706 A
- WO 2016096707 A
- WO 2017037212 A
- WO 2017037215 A
- WO 2011086087 A
- WO 2011086088 A
- EP 2017050237 W
- WO 2006050769 A
- WO 2012072758 A
- WO 2013127907 A

- WO 2016083488 A
- WO 2012126971 A
- WO 2014056641 A
- WO 2014056642 A
- WO 2015086371 A
- WO 2007135135 A
- WO 2013026856 A
- WO 2014147128 A
- WO 2015173285 A
- WO 2015173289 A
- WO 2015173292 A
- WO 2016005352 A
- WO 2016005417 A
- WO 2016005349 A
- EP 2015194020
- EP 1253844 A
- EP 1380243 A
- EP 1809151 A
- WO 2009150030 A
- WO 2010108700 A
- WO 2011107574 A
- WO 2013098173 A